# EUROPÄISCHE PATENTSCHRIFT

(11) **EP 0 710 331 B1**
(45) Veröffentlichungstag und Bekanntmachung des Hinweises auf die Patenterteilung: **01.12.1999**
(21) Anmeldenummer: 94924263.0
(22) Anmeldetag: 19.07.1994
(51) Int. Cl.: F16D 23/06

(54) **GETRIEBESCHALTUNG MIT SPERRSYNCHRONISIERUNG**
LOCK-SYNCHRONISED GEARBOX SHIFT SYSTEM
SYSTEME DE CHANGEMENT DE VITESSES A SYNCHRONISATION A VERROUILLAGE

(30) Priorität: 23.07.1993 DE 4324814
(43) Veröffentlichungstag der Anmeldung: 08.05.1996
(73) Patentinhaber: ZF FRIEDRICHSHAFEN Aktiengesellschaft, 88038 Friedrichshafen (DE)
(72) Erfinder: GAZYAKAN, Ünal, D-88045 Friedrichshafen (DE); BAASCH, Detlef, D-88048 Friedrichshafen (DE); BAILLY, Gerhard, D-88046 Friedrichshafen (DE)
(86) Internationale Anmeldenummer: EP9402373
(87) Internationale Veröffentlichungsnummer: WO9503496

(56) Entgegenhaltungen:
- EP-A- 0 144 962
- EP-A- 0 160 903
- EP-A- 0 221 039
- EP-A- 0 267 714
- DE-B- 2 420 206
- DE-B- 2 754 382
- DE-C- 680 423
- FR-A- 2 459 901
- GB-A- 2 065 800
- GB-A- 2 184 177
- US-A- 4 770 280

## Beschreibung

Die Erfindung betrifft eine Getriebeschaltung mit Sperrsynchronisierung nach dem Oberbegriff des Anspruchs 1.

Für die Übertragung der Antriebsleistung und die Anpassung des Motordrehmomentes an den Zugkraftbedarf eines Fahrzeugs werden heute praktisch ausschließlich mehrstufige Zahnradgetriebe eingesetzt.

Die Getriebeschaltung kann mit Hilfe einer Synchronisiereinrichtung erheblich vereinfacht werden. Beim Synchronisieren wird die Drehzahlanpassung der miteinander zu verbindenden Getriebeelemente selbsttätig oder gesteuert durchgeführt, um so das Doppelkuppeln beim Hochschalten bzw. das Doppelkuppeln mit Zwischengasgeben beim Rückschalten zu vermeiden. Die Fahrsicherheit wird deutlich erhöht, da der Gangwechsel auch in kritischen Fahrsituationen schnell, sicher und auch geräuschlos möglich ist.

In den heutigen synchronisierten Fahrzeuggetrieben werden überwiegend Synchronisiereinrichtungen für jeden einzelnen Gang eingesetzt.

Weit verbreitet ist die Sperrsynchronisierung mit Konus. Bei diesem System passen konische Reibkegel die Drehzahl der zu verbindenden Getriebeelemente kraftschlüssig aneinander an. Diese Art der Synchronisierung wird sowohl in Personenwagen- als auch in Nutzfahrzeuggetrieben verwendet.

Eine solche Sperrsynchronisierung ist beispielsweise bekanntgeworden aus "ZF-B-Sperrsynchronisierung", Druckschrift 42290/R 2964-367 vom März 1967.

Die dort beschriebene Sperrsynchronisierung hat einen mit einer Außenverzahnung versehenen Synchronring, der beim Schalten an den Reibkegel des Kupplungskörpers angepreßt wird und sich dabei bis zu Anschlägen am Synchronkörper relativ zu einer Schiebemuffe verdreht. Dadurch pressen sich angeschrägte Zahnstirnflächen einer Sperrverzahnung des Synchronringes gegen die der Schiebemuffe und verhindern somit ein Weiterbewegen der Schiebemuffe. Erst wenn die Kegelreibflächen den Gleichlauf der zu kuppelnden Teile herbeigeführt haben, wird der Synchronring unter dem anhaltenden Druck der Schiebemuffe durch die Schräge der Zahnstirnflächen zurückgedreht. Die Sperre ist damit gelöst und eine Schaltverzahnung der Schiebemuffe wird in die Verzahnung des Kupplungskörpers eingeschoben.

Im Leerlauf befindet sich die Schiebemuffe in axialer Mittelstellung. Federn drücken die Rastenbolzen in Rasten der Schiebemuffe. Die Losräder können sich frei auf ihrer Welle drehen. Der Drehzahlunterschied zwischen dem Synchronring und dem Kupplungskörper und das Schleppmoment zwischen ihren Reibflächen bewirken, daß sich der Synchronring gegenüber der Schiebemuffe verdreht und somit eine Schaltung sperrt.

In der Sperrstellung hat die Schiebemuffe zunächst über die Rastenbolzen und Druckstücke den Synchronring auf den Reibkonus des Kupplungskörpers geschoben. Die Zahnstirnflächen haben damit die Weiterleitung der Schaltkraft von der Schiebemuffe direkt an den Synchronring übernommen. Solange ein Drehzahlunterschied zwischen Synchronring und Kupplungskörper besteht, ist das Reibmoment an den Kegelreibflächen von Synchronring und Kupplungskörper größer als das Rückstellmoment durch die angeschrägten Zahnstirnflächen. Die Schiebemuffe ist deshalb gegen Durchschalten in den Kupplungskörper gesperrt.

Erst wenn der Drehzahlunterschied zwischen Synchronring und Kupplungskörper ausgeglichen und somit das Reibmoment aufgehoben ist, dreht die Schiebemuffe den Synchronring in die Stellung "Zahn auf Zahnlücke" zurück. Über die Sperrverzahnung des Synchronringes hinweg wird dann die Schiebemuffe in die ebenfalls stirnseitig angeschrägte Verzahnung des Kupplungskörpers eingeschoben.

Weitere derartige Sperrsynchronisierungen sind beispielsweise aus den Dokumenten GB-A-2 184 177 und DE-B-2 420 206 bekannt.

Ausgehend von diesem Stand der Technik ist es Aufgabe der vorliegenden Erfindung, bei kurzen Schaltwegen und geringen Schaltkräften eine hohe Sperrsicherheit und ein verbessertes Schaltgefühl bei einem gleichmäßigen Schaltkraftverlauf zu erzielen.

Die Aufgabe wird erfüllt durch Getriebeschaltungen mit Sperrsynchronisierung mit den Merkmalen des Anspruchs 1. Ausgestaltungen sind Gegenstand von Unteransprüchen.

Die Kupplungsverzahnungen der bekannten Synchronisiereinrichtungen weisen Anschrägungen auf, die den Einspurvorgang ermöglichen sollen. Da die Stellung der Zähne von Schaltmuffe und Kupplungskörper zueinander zufällig ist, muß die freie Drehmasse im Getriebe vor dem formschlüssigen Verbinden so verdreht werden, daß die Kupplungsverzahnung in die geeignete Position zum Einspuren gelangt.

Die Kupplungsverzahnung der erfindungsgemäß vorgeschlagenen Sperrsynchronisierung weist keinerlei Anschrägungen auf. Die Wahrscheinlichkeit, daß die Zähne von Schiebemuffe und Kupplungskörper in einer einspurfähigen Position voreinanderstehen ist sehr gering und wird durch die fehlenden Anschrägungen auch nicht gefördert. Um dem schaltenden Fahrzeugführer trotzdem den Eindruck zu vermitteln, daß der Schaltvorgang wie gewohnt abläuft, ist die Kupplungsverzahnung angefedert und kann dem axialen Schaltdruck ausweichen. In der Schaltendposition kann der Schaltmechanismus durch eine Rastvorrichtung arretiert werden, so daß die gespannte Feder auch nach Loslassen des Schalthebels durch den Fahrer und Wegfall des axialen Schaltdruckes gespannt bleibt.

Diese Rastvorrichtung wird beispielsweise gebildet durch Rastenbolzen mit Druckfedern, die im Synchronkörper der Sperrsynchronisierung gehalten sind. Sie halten sowohl die axial verschiebbare Schiebemuffe in einer neutralen Mittelstellung, als auch in der jeweils gewünschten Endstellung im geschalteten Gang.

Die Stirnflächen der für die Drehmomentübertragung vorgesehenen Kupplungsverzahnung stehen somit nach Ende des Schaltvorganges durch den Fahrer mit hoher Wahrscheinlichkeit unter Vorspannung der Feder aufeinander.

Ist es zufällig bereits zu einem Einspuren gekommen, so ist der Schaltvorgang insgesamt abgeschlossen. Andernfalls wird in dem Zustand, daß die Verzahnungen verspannt aufeinanderstehen, die Fahrzeugkupplung geschlossen und das sich aufbauende Drehmoment verdreht die Verzahnungen gegeneinander. Es kommt dann zum Einspuren der Verzahnungen und die Schaltung ist abgeschlossen. Auch durch Schleppmomente am Radsatz des Getriebes ist ein vorzeitiges Verdrehen der Verzahnungen gegeneinander und ein anschließendes Einspuren möglich.

Wird ein direktes Einspuren der Kupplungsverzahnung ineinander erreicht oder läßt sich das Einspuren so schnell vornehmen, daß keine Rastierung notwendig ist, weil die Schaltkraft noch ansteht, so kann auf eine Rastvorrichtung verzichtet werden. Die vorliegenden Schleppmomente in einer Getriebeschaltung ermöglichen häufig dieses direkte Einspuren. Reichen die Schleppmomente nicht aus, so ist die Rastvorrichtung erforderlich, da die Schaltkraft, sofern sie durch den Fahrer ausgeübt wird, nicht mehr ansteht und das Einspuren erst mit dem Einrücken der Kupplung erfolgt.
Wird die Schaltung beispielsweise nicht von einem Fahrer per Schaltgestänge von Hand ausgeführt, so ist auch die Alternative einer automatischen Schaltung durch Schaltmittel möglich, die vom Fahrer fernbetätigt werden. Dabei kann die Fernbetätigung auch unter Zwischenschaltung einer logischen Steuerung geschehen, die Einfluß auf die schaltbaren Gangstufen nimmt. Unbeeinflußt durch den Fahrer kann eine Automatik auch die gesamte Schaltung des Schaltgetriebes übernehmen, wobei vorzugsweise immer in den optimalen Bereichen geschaltet wird.
Als Schaltmittel kommen überwiegend pneumatisch oder elektrisch betätigte Schaltmittel zum Einsatz.

Durch den Wegfall der Einspurschrägen an den Kupplungsverzahnungen verkürzt sich der Schaltweg im Vergleich zu den bekannten Synchronisiereinrichtungen. Dieser Weggewinn kann zu einer Vergrößerung der Übersetzung zwischen Schalthebel und Kupplungsverzahnung genutzt werden. Dadurch läßt sich die erforderliche Schaftkraft deutlich verringern.

Die Erfindung wird anhand der Figuren näher erläutert.
Es zeigen:
- Fig. 1: eine Darstellung der erfindungsgemäßen Getriebeschaltung;
- Fig. 2: einen skizzierten Schnitt durch die Getriebeschaltung in Neutralstellung;
- Fig. 3: einen skizzierten Schnitt durch die Getriebeschaltung bei Erzeugen der Sperrstellung;
- Fig. 4: einen skizzierten Schnitt durch die Getriebeschaltung in Entsperrstellung;
- Fig. 5: einen skizzierten Schnitt durch die Getriebeschaltung beim Anlegen der Schiebemuffe;
- Fig. 6: einen skizzierten Schnitt durch die Getriebeschaltung in Haltestellung;
- Fig. 7: einen skizzierten Schnitt durch die Getriebeschaltung bei eingeschaltetem Gang;
- Fig. 8: einen skizzierten Schnitt durch die Getriebeschaltung beim Ausschalten des Ganges;
- Fig. 9: eine Darstellung des Schaltkraftverlaufs;
- Fig. 10 bis 18: alternative Ausgestaltungen der Erfindung;
- Fig. 19: einen Schnitt nach Fig. 10 und
- Fig. 20 und 21: weitere Ausgestaltungen der Erfindung.

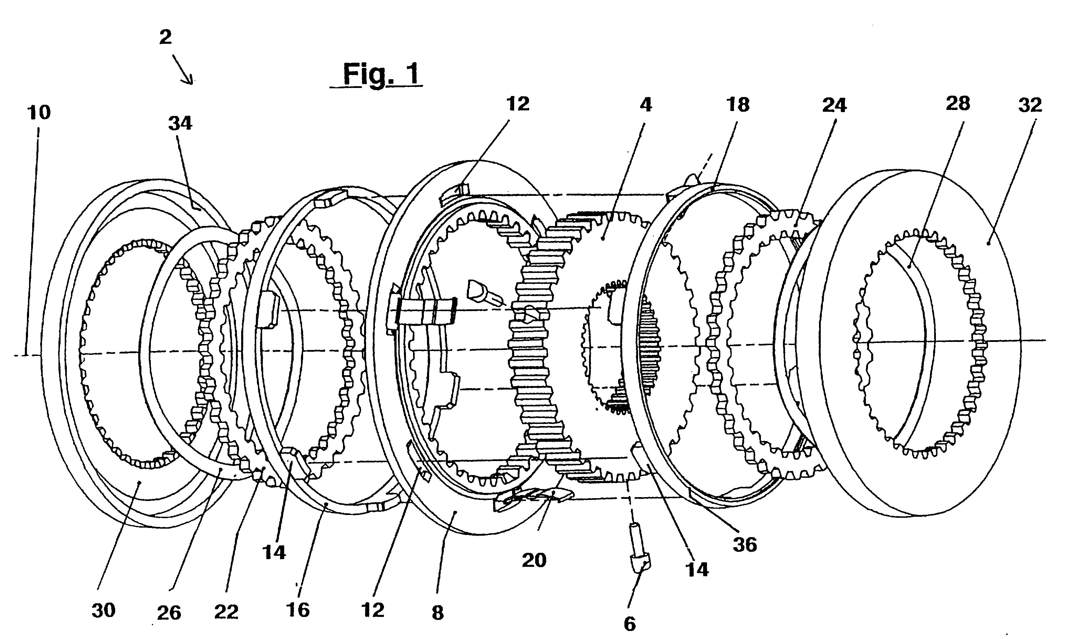

Die Fig. 1 zeigt eine explosionsartige Darstellung der erfindungsgemäßen Getriebeschaltung 2 in einer vorteilhaften Ausführung. In einem Synchronkörper 4 sind auf dem Umfang verteilt Rastenbolzen 6 angeordnet. Die Rastenbolzen werden über hier nicht gezeigte Federelemente, die im Synchronkörper 4 vorgesehen sind, angefedert. Beispielhaft sind hier drei Rastenbolzen 6 dargestellt, die unter gleichen Winkeln am Umfang des Synchronkörpers 4 verteilt sind. Die Rastenbolzen 6 greifen in Einkerbungen in einer den Synchronkörper 4 umschließenden Schiebemuffe 8 ein. Diese Einkerbungen markieren die Mittelstellung der Schiebemuffe in der Neutralstellung. Die Außenverzahnung des Synchronkörpers 4 korrespondiert mit der Innenverzahnung der Schiebemuffe 8, wobei die Schiebemuffe 8 auf dem Synchronkörper 6 entlang einer Achse 10 in beiden Richtungen aus der Neutralstellung heraus verschoben werden kann. Die ansonsten stumpfen Enden der Innenverzahnung der Schiebemuffe 8 weisen nur in den Bereichen der Rastenbolzen 6 Abschrägungen auf, an denen die Rastenbolzen 6 in jeweiligen Endstellungen der Schiebemuffe 8 anliegen können. Der Synchronkörper 6 selbst weist eine Innenverzahnung auf, mit der er auf einer hier ebenfalls nicht gezeigten Welle axial und in Umfangsrichtung drehfest angeordnet ist.

Die Schiebemuffe 8 weist auf ihrem Umfang mehrere Ausnehmungen 12 auf. Mit diesen Ausnehmungen 12 korrespondieren mehrere Vorsprünge 14 von zwei inneren Synchronringen 16 und 18. Jeweils ein Vorsprung 14 von Synchronring 16 und von Synchronring 18 ragen durch eine Ausnehmung 12 der Schiebemuffe 8 hindurch, wobei die Vorsprünge 14 der beiden Synchronringe 16 und 18 untereinander verbunden, z. B. verschweißt, sind. In wenigstens einigen der Ausnehmungen 12 der Schiebemuffe 8 befindet sich neben den Vorsprüngen 14 auch eine Blattfeder 20. Die Blattfeder 20 weist eine Einkerbung auf, in der in Neutralstellung eine Kante der Ausnehmung 12 der Schiebemuffe 8 liegt. Die Blattfeder 20 greift an den beiden inneren Synchronringe 16 und 18 an, so daß eine Fixierung der Blattfeder 20 einerseits durch die inneren Synchronringe 16 und 18 und andererseits durch die Schiebemuffe 8 in der Ausnehmung 12 vorgenommen wird. Vorteilhafterweise liegen die Ausnehmungen 12 ebenfalls unter gleichen Winkeln auf dem Umfang der Schiebemuffe 8 verteilt vor, wobei die Ausnehmungen 12, die auch die Blattfedern 20 aufnehmen, über den Ausnehmungen für die Rastbolzen 6 vorgesehen sein können. Eine Anordnung von sechs Ausnehmungen 12 hat sich als vorteilhafte Ausführungsform erwiesen.

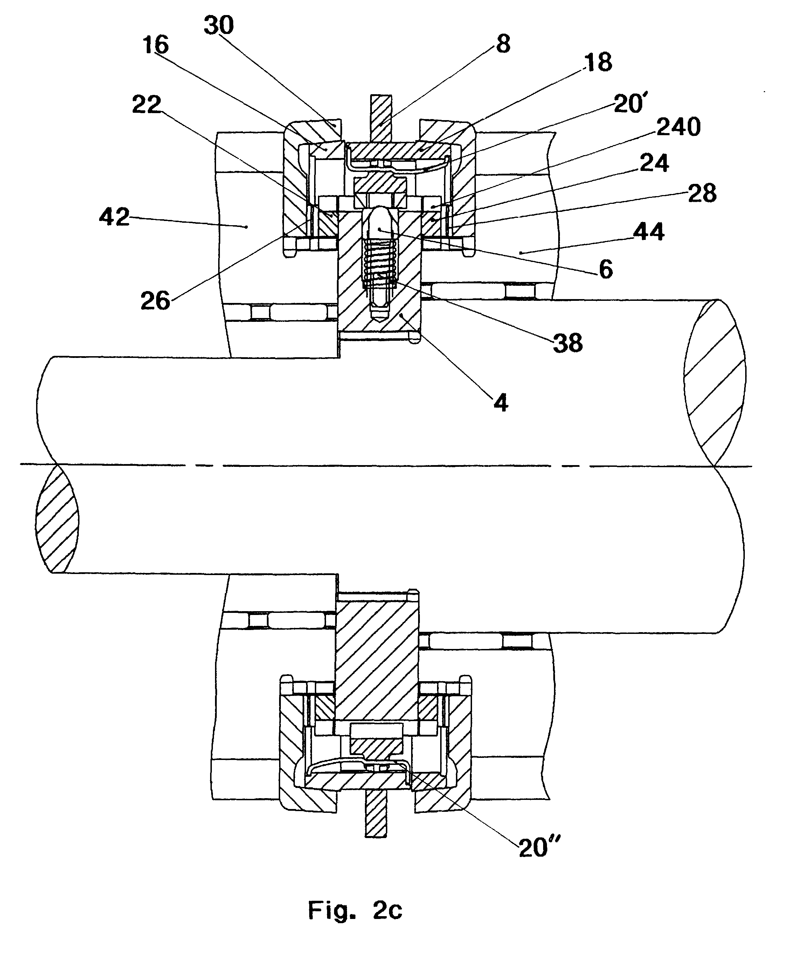

Fig. 2C zeigt eine Ausführung, bei der die Synchronringe 16 und 18 nicht miteinander verbunden sind. In diesem Fall ist für jeden Synchronring 16, 20 eine Ringfeder 20' und 20" vorgesehen. Da die beiden Synchronringe voneinander unabhängig betätigt werden und arbeiten, beeinflussen sie sich nicht gegenseitig durch Schleppmomente und Massenträgheitsmomente, so daß das Sperr- und Schaltverhalten verbessert wird. Außerdem verbilligt sich die Fertigung und die Montage wird vereinfacht.

An den Synchronkörper 4 legt sich auf jeder Seite jeweils ein Kupplungskörper 22 und 24 an. Die Kupplungskörper 22 und 24 weisen Außenverzahnungen auf, die der Außenverzahnung des Synchronkörpers 4 entsprechen und mit der Innenverzahnung der Schiebemuffe 8 korrespondieren. Ebenso weisen die Kupplungskörper 22 und 24 Innenverzahnungen auf, die mit einer hier nicht gezeigten Außenverzahnung eines zu kuppelnden Zahnrades korrespondieren. Dabei sind die Kupplungskörper 22 und 24 mit ihren Innenverzahnungen mit leichtem axialem Spiel auf der Außenverzahnung des Zahnrades vorgesehen. Keine der Verzahnungen weist dabei Anschrägungen oder Abflachungen auf.

An die Kupplungskörper 22 und 24 schließt sich auf jeder vom Synchronkörper 4 abgewandten Seite je eine Wellfeder 26 und 28 und je ein äußerer Synchronring 30 und 32 an. Die äußeren Synchronringe 30 und 32 weisen Innenverzahnungen auf, die mit den Außenverzahnungen der hier nicht gezeigten Zahnräder korrespondieren. Ebenfalls weisen die äußeren Synchronringe 30 und 32 an ihrem Außenrand innenliegende, konisch verlaufende Reibflächen 34 auf.

Die innenliegenden Reibflächen 34 bilden beim Synchronisiervorgang mit außenliegenden Reibflächen 36 an den inneren Synchronringen 16 und 18 eine kraftschlüssige Verbindung.

Die vorstehend beschriebene Getriebeschaltung weist nur einen geringen axialen Bauraumbedarf auf.

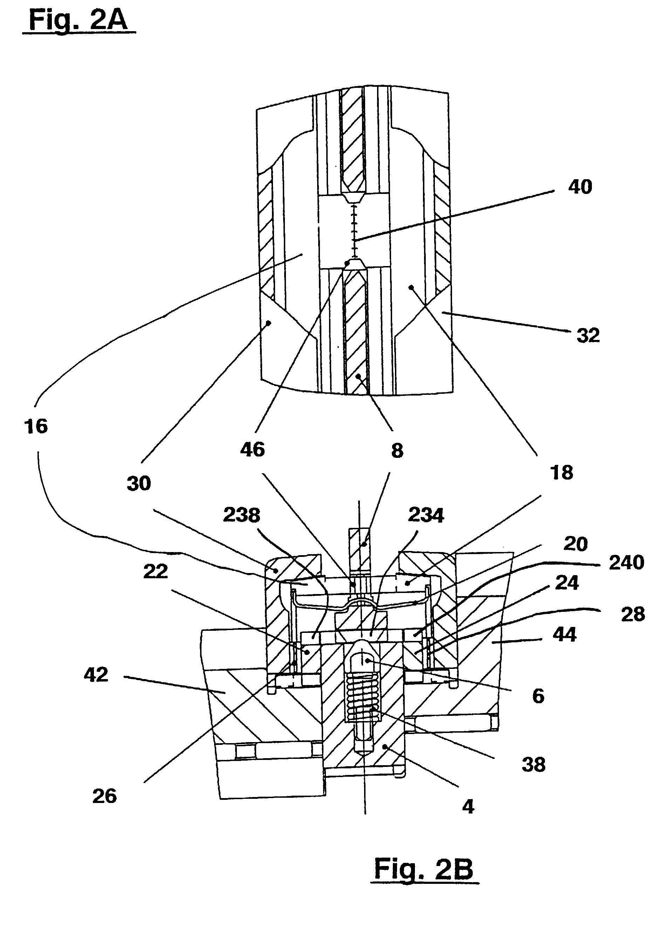

In der Fig. 2 ist die erfindungsgemäße Getriebeschaltung in ihrer Neutralstellung im Schnitt dargestellt. Die Fig. 2A zeigt eine Perspektive, die gegenüber der Darstellung in Fig. 2B um 90° gedreht ist, so daß in Fig. 2A die Schiebemuffe 8 und Teile der äußeren Synchronringe 30 und 32 geschnitten dargestellt sind. Diese Darstellungsweise wiederholt sich in den folgenden Figuren.

Rastenbolzen 6 mit Druckfedern 38 halten die auf dem Synchronkörper 4 axial verschiebbare Schiebemuffe 8 in Mittelstellung. Vorzugsweise sind auf dem Umfang des Synchronkörpers 4 drei derartige Rastenbolzen 6 unter gleichen Winkeln verteilt angeordnet (vgl. Fig. 1). Die verbundenen inneren Synchronringe 16 und 18, deren Verbindung hier als Schweißnaht 40 dargestellt ist, werden durch Blattfedern 20 in Mittelstellung gegenüber der Schiebemuffe 8 gehalten. Die Kupplungskörper 22 und 24 werden durch Federelemente, beispielsweise Wellfedern 26 und 28, mit geringer Kraft gegen den Synchronkörper 4 gedrückt, wobei der Synchronkörper 4 den Kupplungskörpern 22 und 24 als Anschlag dient. Gleichermaßen werden die äußeren Synchronringe 30 und 32 gegen die Zahnräder 42 und 44 gedrückt. Die Sperrverzahnung 46 der Getriebeschaltung 2 ist an den verschiedenen Vorsprüngen 14 an den inneren Synchronringen 16 und 18 vorgesehen. Die Sperrverzahnung ist so oft am Umfang der inneren Synchronringe 16 und 18 verteilt angeordnet, wie Vorsprünge 14 vorgesehen sind.

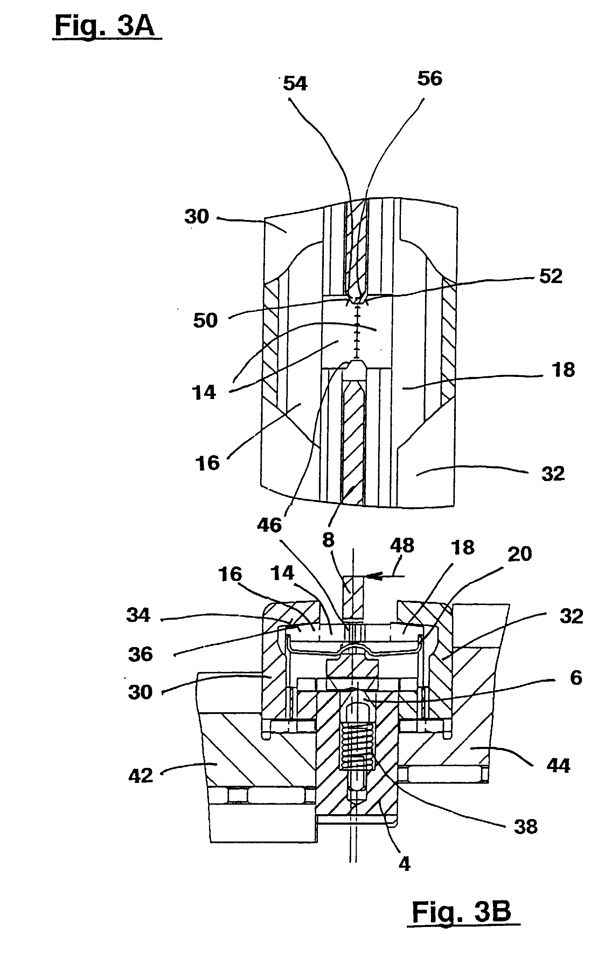

Die Erzeugung der Sperrstellung an der Getriebeschaltung 2 zeigt die Fig. 3. Die Fig. 3A zeigt die Schiebemuffe 8 und einen Teil der äußeren Synchronringe 30 und 32, geschnitten.

Beim Verschieben der Schiebemuffe 8 durch eine Schaltkraft 48 werden die miteinander verbundenen inneren Synchronringe 16 und 18 mitbewegt. Mit der vorgebbaren Kraft der Blattfedern 20 wird die Reibfläche 36 des inneren Synchronrings 16 gegen die Reibfläche 34 des äußeren Synchronrings 30 gedrückt. Die Blattfedern 20 werden bei einer axialen Relativbewegung zwischen inneren Synchronringen 16, 18 und Schiebemuffe 8 verformt. Durch die entstehende Federkraft und die entsprechende Federgeometrie entsteht eine Axialkraft, mit der der innere Synchronring 16 gegen den äußeren Synchronring 30 gedrückt wird. Infolge der Differenzdrehzahl zwischen äußerem Synchronring 30 und innerem Synchronring 16 wird der innere Synchronring 16 relativ zur Schiebemuffe 8 verdreht. Die Sperrverzahnung 46 bildet im Bereich der aneinanderstoßenden Vorsprünge 14 der inneren Synchronringe 16 und 18 Sperrflanken 50 und 52, die mit Sperrflanken 54 und 56 der Schiebemuffe 8 korrespondieren. Bei der Erzeugung der Sperrstellung treffen die Sperrflanken 50 am inneren Synchronring 16 auf die entsprechenden Sperrflanken 54 der Schiebemuffe 8. Die Winkel der Sperrflanken 50 und 54 sind so ausgelegt, daß ein weiteres Verschieben der Schiebemuffe 8 gegenüber den inneren Synchronringen 16 und 18 nicht möglich ist, bevor die Differenzdrehzahl zwischen äußerem Synchronring 30 und innerem Synchronring 16 nahezu Null ist. Beim Verschieben von Schiebemuffe 8 werden die Rastenbolzen 6 gegen die Druckfedern 38 in ihre Ausnehmungen im Synchronkörper 4 zurückgedrückt.

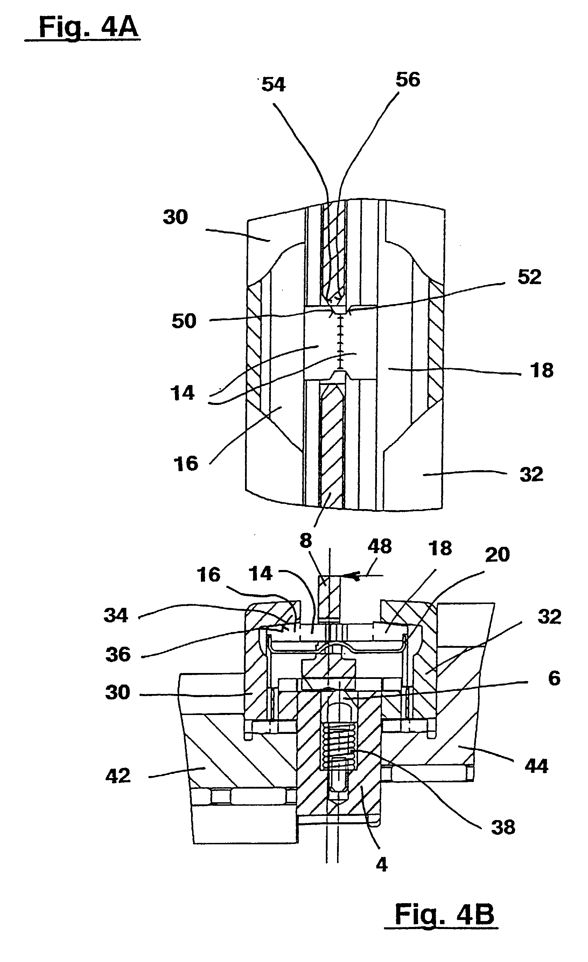

Bei Drehzahlgleichheit zwischen äußerem Synchronring 30 und innerem Synchronring 16 wird ein weiteres Verschieben der Schiebemuffe 8 bei gleichzeitigem Verdrehen der inneren Synchronringe 16 und 18 möglich. Die Sperrflanken 50 und 54 lösen sich voneinander. Eine solche Entsperrstellung zeigt die Fig. 4. Die Rastenbolzen 6 bleiben in ihrer zurückgedrückten Position in den Ausnehmungen des Synchronkörpers 4.

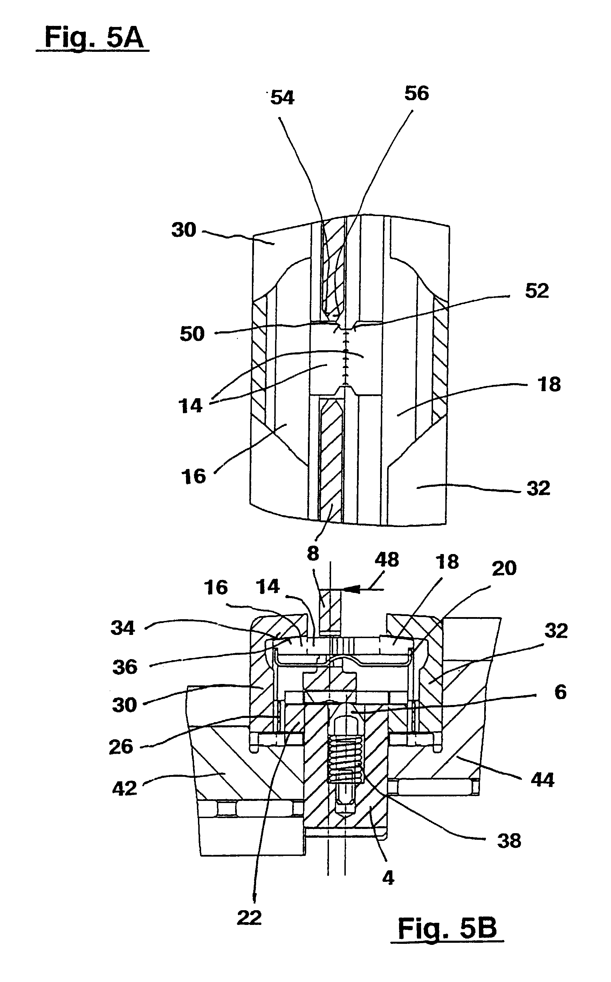

Fig. 5 zeigt das Auftreffen der Schiebemuffe 8 auf den Kupplungskörper 22. Beim weiteren Durchschalten der Schiebemuffe 8 durch die ausgeübte Schaltkraft 48 wird durch die Blattfedern 20 eine Kraft auf die Reibflächen 34 und 36 von äußerem und innerem Synchronring 30 und 16 ausgeübt, um dem Entstehen einer Differenzdrehzahl zwischen äußerem Synchronring 30 und innerem Synchronring 16 und damit zwischen Kupplungskörper 22 und Schiebemuffe 8 entgegenzuwirken.

Nach einem Gesamtschaltweg von ca. 4 mm trifft die Innenverzahnung der Schiebemuffe 8 auf die Außenverzahnung des Kupplungskörpers 22. Findet kein sofortiges Einspuren statt, so kann der Kupplungskörper 22 von der Schiebemuffe 8 gegen die Federkraft der Wellfeder 26 axial verschoben werden, maximal bis der Kupplungskörper 22 am äußeren Synchronring 30 anschlägt.

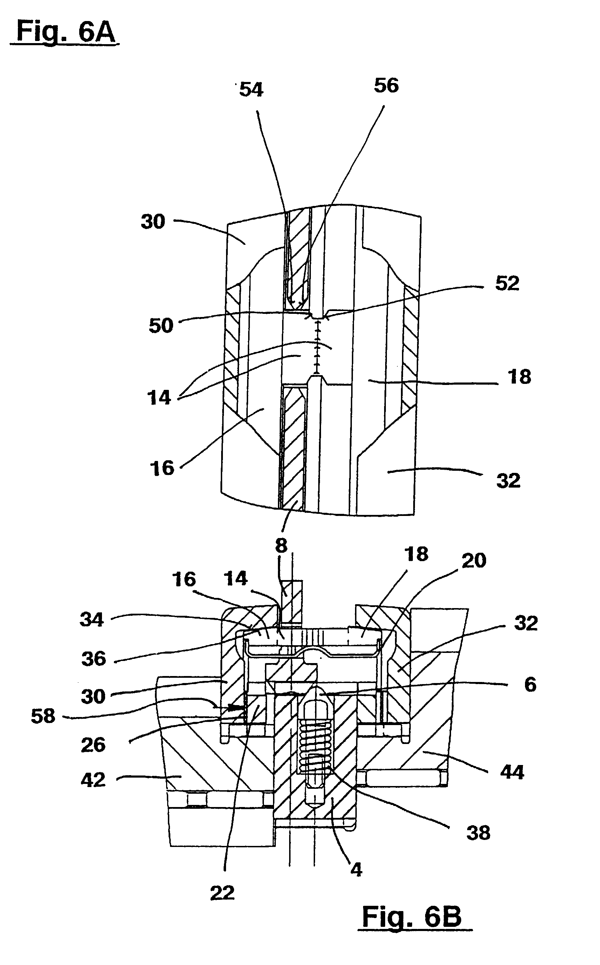

Ist diese Position der Schiebemuffe 8 erreicht, so ist für den Fahrer der Gang geschaltet, obwohl noch keine formschlüssige Verbindung zwischen Kupplungskörper 22 und Schiebemuffe 8 hergestellt ist. Die in dieser Position notwendige Haltekraft gegen die Wellfeder 26 wird von dem Rastenbolzen 6 aufgebracht (siehe Fig. 6 ). Der Rastenbolzen 6 wird von der Druckfeder 38 mit einer vorgebbaren Kraft gegen die Anschrägung 50 an der Schiebemuffe 8 gedrückt. Die dadurch entstehende Axialkraft muß mindestens der Kraft 58 der Wellfeder 26 entsprechen.

In der Haltestellung der Fig. 6 ist die Schiebemuffe 8 noch ca. 1 mm von ihrem Endanschlag entfernt. Dem Fahrer wird somit die Möglichkeit gegeben, die Schiebemuffe 8 mit erhöhter Schaltkraft 48 auf den Kupplungskörper 22 zu drücken. Diese "Notschaltung" wird dann notwendig, wenn durch Fehler an der Synchronisiereinrichtung eine zu hohe Differenzdrehzahl zwischen Kupplungskörper 22 und Schiebemuffe 8 entstanden ist, die ein Einpuren der Außenverzahnung des Kupplungskörpers 22 in die Innenverzahnung der Schiebemuffe 8 mit der Kraft der Wellfeder 26 nicht ermöglicht.

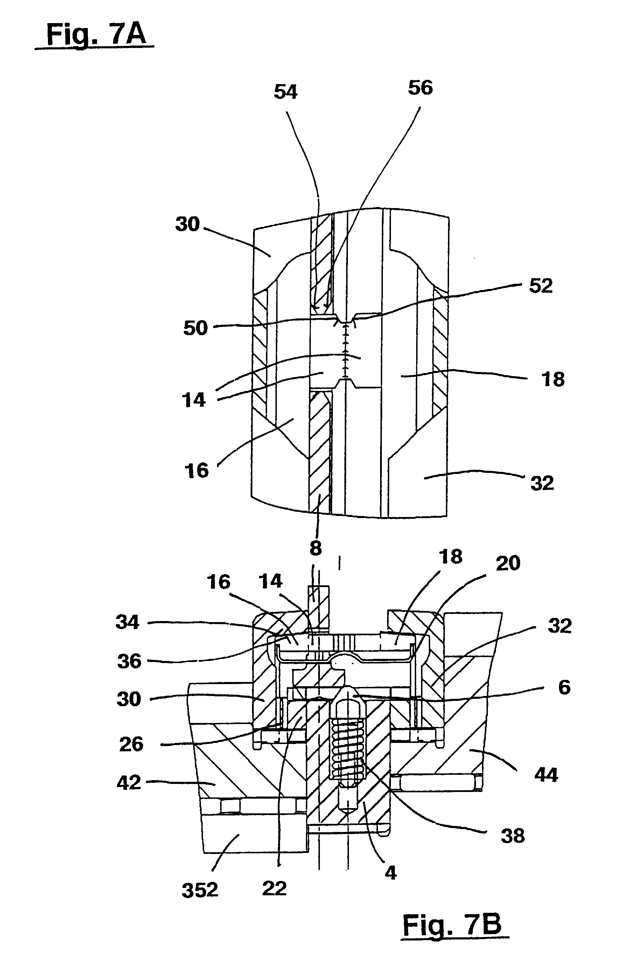

Durch Verlust- oder Kupplungsmomente entsteht eine Differenzdrehzahl zwischen Kupplungskörper 22 und Schiebemuffe 8, die ein Einspuren der Verzahnungen zuläßt. Dabei bewegt sich der Kupplungskörper 22 infolge der Federkraft der Wellfeder 26 in die Richtung des Synchronköpers 4, während sich die Schiebemuffe 8 in die entgegengesetzte Richtung infolge der durch den Rastenbolzen übertragenen Kraft bewegt. Die Schiebemuffe 8 kann sich bis zum Anschlagen an den äußeren Synchronring 30 bewegen. Die Momentenübertragung vom Zahnrad 42 zur Welle 352 ist somit über den Kupplungskörper 22, die Schiebemuffe 8 und den Synchronkörper 4 hergestellt (vgl. Fig. 7).

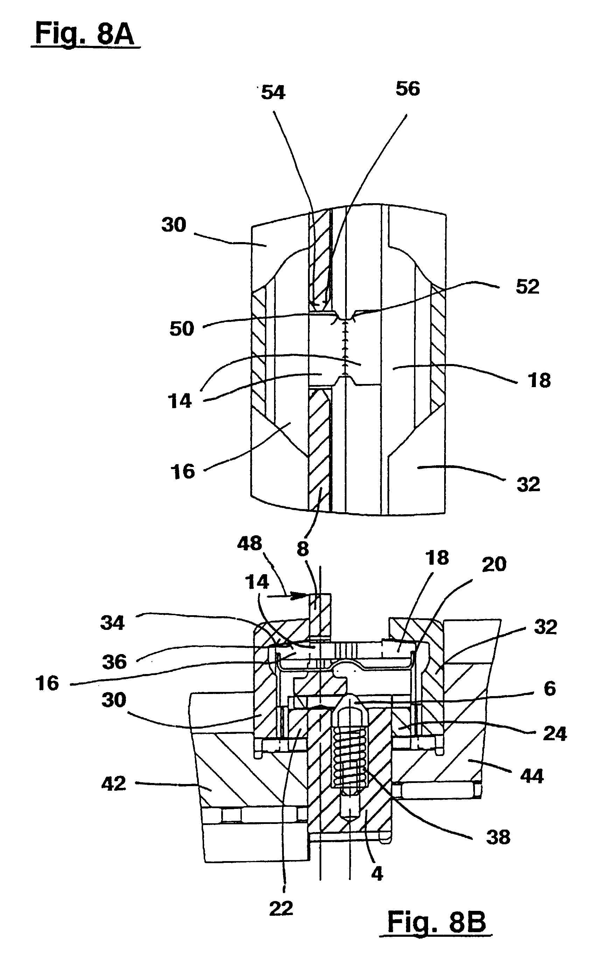

Wird zum Ausschalten des Ganges die Schiebemuffe 8 in Richtung neutral verschoben, so muß der Rastenbolzen 6 gegen die Druckfeder 38 bewegt werden (Fig. 8). Dazu ist eine Schaltkraft 48 notwendig, um den Gang auszuschalten. Weiterhin werden durch die Schiebemuffe 8 die inneren Synchronringe 16 und 18 aufgrund der Blattfedern 20 mit in Richtung Mittelstellung der Schiebemuffe 20 bewegt.

Dem Fahrer wird im Gegensatz zu bisherigen Getriebeschaltungen das Einspuren in die momentenübertragende Verzahnung nicht mehr überlassen. Für ihn ist die Schaltung dann beendet, wenn entweder der Kupplungskörper 22, 24 zusammen mit den Wellfedern 26, 28 an den äußeren Synronring 30, 32 anschlägt oder die Schiebemuffe 8 an den äußeren Synchronring 30, 32 anschlägt, wobei im zweiten Fall bereits ein vorzeitiges Einspuren des Kupplungskörpers 22, 24 in die Schiebemuffe 8 stattgefunden hat. Eine Rückwirkung auf die Schaltanlage und auf die Hand des Fahrers in Form von Kraftspitzen durch Abweisen der Schiebemuffe beim Einspuren findet nicht mehr statt.

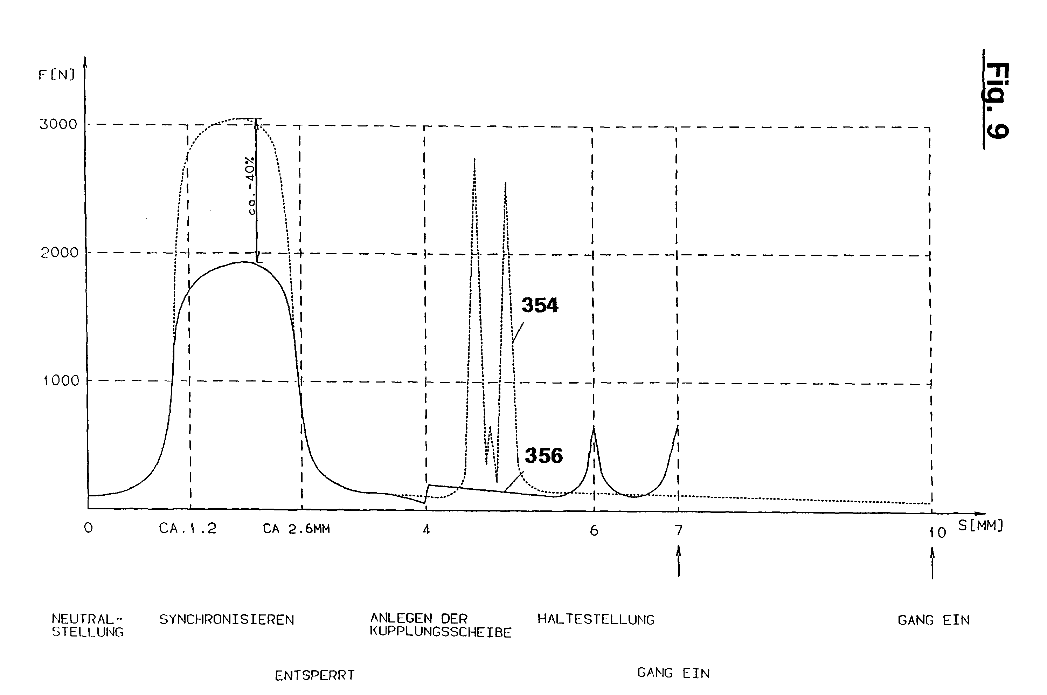

Die Fig. 9 zeigt den Verlauf der Schaltkraft, aufgetragen über dem Schaltweg im Vergleich von bekannter 354 und erfindungsgemäßer Getriebeschaltung 356.

Deutlich ist zunächst zu erkennen, daß der Schaltweg der erfindungsgemäßen Getriebeschaltung bereits nach ca. 7 mm abgeschlossen ist, während bekannte Getriebeschaltungen einen Weg von 10 mm beanspruchen.

Auch die Schaltkräfte fallen deutlich unterschiedlich aus. Im Bereich zwischen ca. 1,0 mm und 2,6 mm des Schaltweges liegt die erforderliche Schaltkraft der erfindungsgemäßen Getriebeschaltung ca. 40 % niedriger als bisher. Die Schaltkraftspitzen im Verlauf der bekannten Getriebeschaltung im Bereich zwischen 4 und 6 mm entstehen durch das Auftreffen der Kupplungsverzahnung aufeinander und durch das Verdrehen des Kupplungskörpers. Diese Elemente beeinträchtigen bei dem erfindungsgemäßen Konzept das Schaltverhalten für den Fahrer nicht. Das leichte Ansteigen der Schaltkraft im Bereich von ca. 6 mm Schaltweg ist auf das Einrasten der Rastvorrichtung zurückzuführen, es ist im Vergleich zu bisherigen Schaltkraftspitzen aber vernachlässigbar. Der Verlauf der Schaltkraft ist nur als beispielhaft für die Verwendung der Erfindung zu betrachten.

Je nach Größe der zu schaltenden Zahnräder eröffnet eine weitere vorteilhafte Ausgestaltung der Erfindung, daß die äußeren Synchronringe entfallen und durch entsprechend ausgestaltete innere Reibflächen, die in den Zahnrädern integriert sind, ersetzt werden. Dabei ist fallweise eine weitere Verringerung des axialen Bauraums möglich.

Die weiteren Figuren zeigen Ausgestaltungsmögmöglichkeiten der grundsätzlichen Erfindung. In allen Fällen ist sowohl die Anordnung separater, äußerer Synchronringe als auch die Integration der Reib- und Anschlagsfläche in den jeweiligen Zahnrädern möglich.

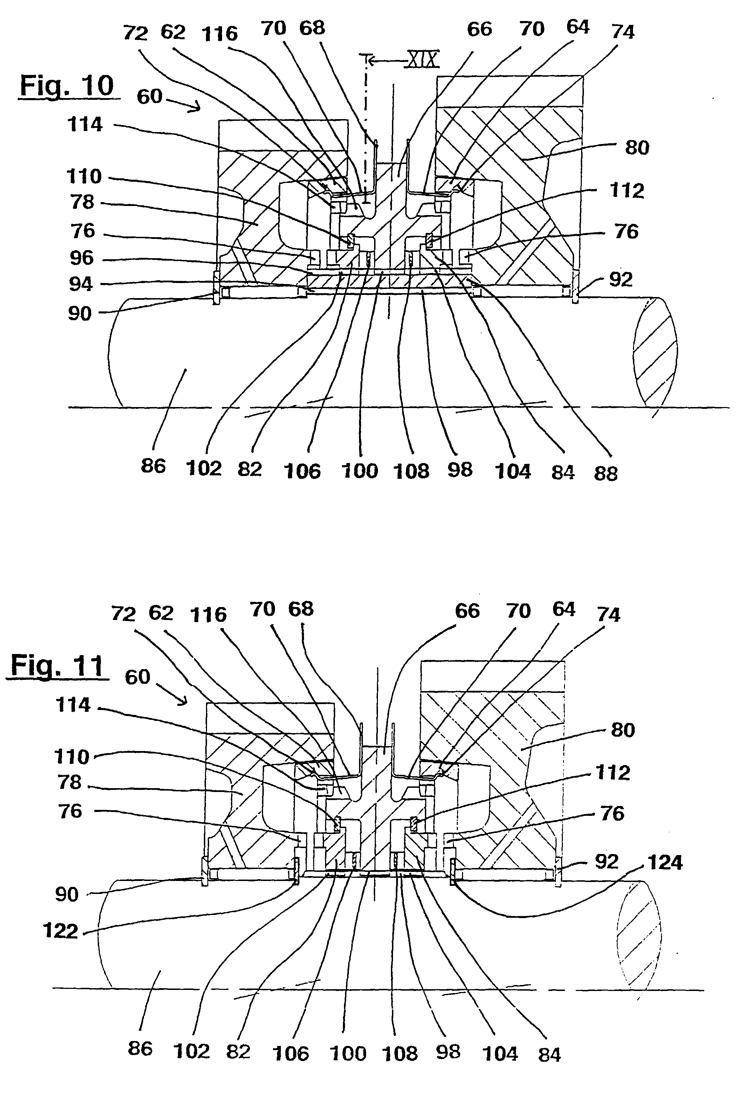

So zeigen die Fig. 10 bis Fig. 21 andere Anordnungen der Einzelteile der Synchronisierung, wobei andere Wege der Momentenübertragung möglich sind.

Die Fig. 10 zeigt eine alternative Konstruktion, die von einer Synchronisiereinrichtung für Zahnräderschaltgetriebe nach der DE-PS 24 20 206 ausgeht. In der DE-PS 24 20 206 wird vorgeschlagen, die beiden Synchronringe 62, 64 der Synchronisiereinrichtung 60 durch einen an der Schiebemuffe 66 befestigten Blechkranz 68 zu koppeln. Der Blechkranz 68 weist dabei mehrere in etwa achsparallele, radial federnde Zungen 70 auf, deren abgewinkelte oder gerundete freie Enden in jeweils einer an dem Synchronring 62, 64 angebrachten umlaufenden Rille 72, 74 mit Vorspannung anliegen. Die zweigeteilte Schiebemuffe der DE-PS 24 20 206 weist beiderseits außen Kupplungsverzahnungen mit abgeschrägten Übergangsflächen auf.

Demgegenüber weisen vorliegende erfindungsgemäße Ausgestaltungen stumpfe Kupplungsverzahnungen 76 auf, die federbelastet nach Drehzahlgleichheit von Zahnrad 78, 80 und Kupplungsscheibe 82, 84 die zu kuppelnden Elemente 78 und 82 oder 80 und 84 verbinden. In der Fig. 10 ist bei einer Synchronisiereinrichtung 60 auf einer Getriebewelle 86 ein Zahnkranz 88 zwischen den Zahnrädern 78 und 80 angeordnet. Die Zahnräder 78 und 80 sind axial durch Befestigungselemente 90, 92 und den Zahnkranz 88 fixiert, aber auf der Welle 86 frei drehbar. Der Zahnkranz 88 weist eine Innenverzahnung 94 und eine Außenverzahnung 96 auf. Mit der Innenverzahnung 94 steht der Zahnkranz 88 mit einer Außenverzahnung 98 der Welle 86 in Eingriff. Die Außenverzahnung 96 des Zahnkranzes 88 steht mit einer Innenverzahnung 100 der Schiebemuffe 66 und mit Innenverzahnungen 102 und 104 der Kupplungsscheiben 82 und 84 in Eingriff. Zwischen den Kupplungsscheiben 82, 84 und der Schiebemuffe 66 ist jeweils ein Federelement 106, 108, beispielsweise als Wellfeder, vorgesehen. Bei Verschiebungen der Schiebemuffe 66 werden die Kupplungsscheiben 82, 84 über Ringelemente 110, 112 in axialer Richtung mitgenommen. So bewirkt ein Verschieben der Schiebemuffe 66 nach links, daß das rechte Ringelement 112 die rechte Kupplungsscheibe 84 ebenfalls nach links bewegt. Dabei schiebt die Schiebemuffe 66 über das linke Federelement 106 die linke Kupplungsscheibe 82 so weit nach links, bis die Kupplungsverzahnung 76 flach aufeinandersteht, oder zufällig bereits die Kupplungsverzahnung 76 von Zahnrad 78 und Kupplungsscheibe 82 ineinander einspurt. Wird nicht zufällig bereits eingespurt, so wird das linke Federelement 106 entgegen seiner Federkraft belastet und hält die Zähne der Kupplungsverzahnung 76 unter Vorspannung.

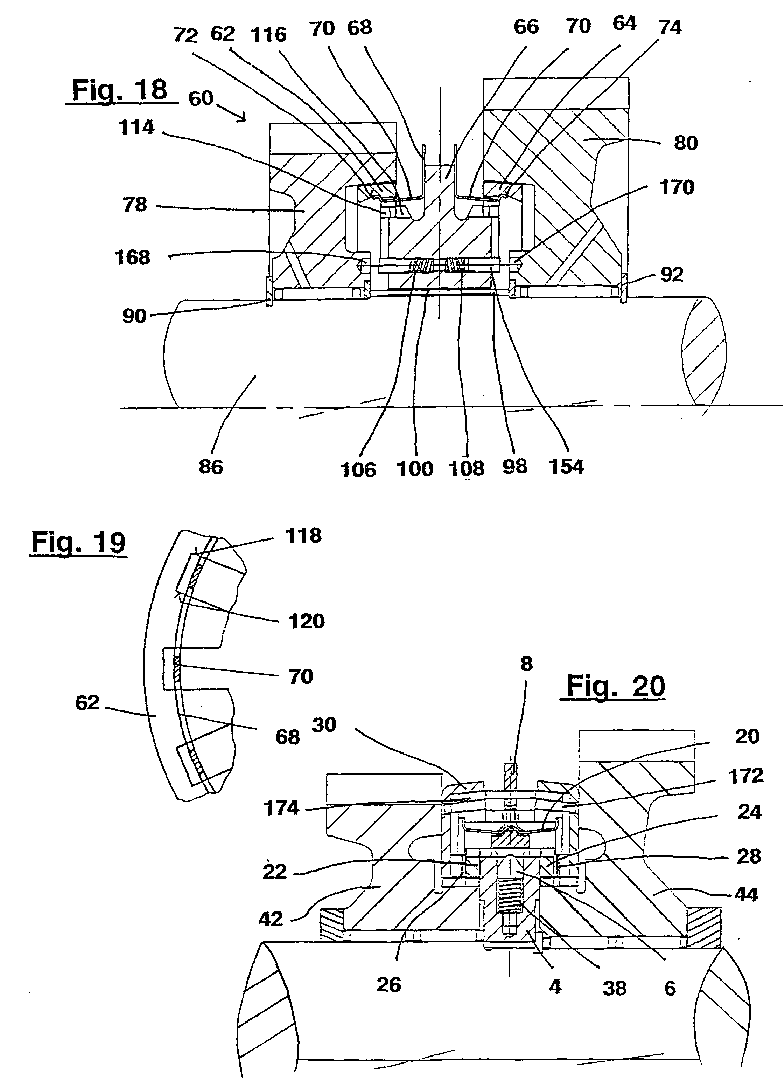

Bevor die Kupplungsverzahnung 76 in der Lage ist, einzuspuren bzw. bevor die stumpfen Zähne der Kupplungsverzahnung 76 aneinander anliegen können, muß zunächst Gleichlauf von Zahnrad 78 und Kupplungsscheibe 82 erzielt werden. Beim Einleiten der Schaltbewegung nach links in Richtung auf das Zahnrad 78 bewegt sich die Schaltmuffe 66 und die Blechkränze 68 sowie die Synchronringe 62 und 64, die von den Blechkränzen 68 gehalten werden, mit geringem Spiel auf das Zahnrad 78 zu, bis die kegeligen Reibflächen von Synchronring 62 und Zahnrad 78 aneinander anliegen. Bei weiterem Verschieben gleiten die federnden Zungen 70 aus der Rille 72 des Synchronringes 62 heraus, und die federnden Zungen 70 werden entgegen ihrer Vorspannkraft radial nach innen gedrückt. Hierzu ist die Überwindung einer vorbestimmten, durch Anzahl und Ausbildung der Federzungen 70 sowie die Form der Rille 72 bedingte Widerstandskraft notwendig. Die Widerstandskraft überträgt sich als axiale Anpreßkraft von den Federzungen 70 auf den Synchronring 62 und von dort auf die Reibflächen. Dadurch wird vor Eintritt des Gleichlaufs ein bestimmtes Reibmoment auf den Synchronring 62 ausgeübt, was diesen in eine Sperrstellung verdreht. Die Rückdrehung des Synchronringes 62 aus der Sperrstellung in die Einspurstellung erfolgt erst nach Eintritt des Gleichlaufs durch die abgeschrägten Übergangsflächen der Sperrverzahnung, die sich aus den Sperrzähnen 114 an dem Synchronring 62 und den Sperrzähnen 116 an der Schiebemuffe 66 bildet. Die Verdrehung zwischen Schiebemuffe 66 und Synchronring 62 wird begrenzt durch Anschläge 118 und 120, die durch Ausschnitte des Synchronringes 62 zum Durchtritt der Federzungen 70 entstehen (siehe Fig. 19).

Eine veränderte Darstellung der Getriebeschaltung nach Fig. 10 zeigt die Fig. 11. Hier greifen die Innenverzahnung 100 der Schiebemuffe 66 und die Innenverzahnungen 102 und 104 der Kupplungsscheiben 82 und 84 direkt in die Außenverzahnung 98 der Welle 86 ein. Die Zahnräder 78 und 80 werden axial auf der Welle 86 durch Befestigungselemente 90, 92, 122 und 124 gehalten. Diese Befestigungsmittel 90, 92, 122, 124 sind beispielsweise als Sprengringe ausgebildet, die in entsprechenden Ausnehmungen der Welle 86 fixiert sind.

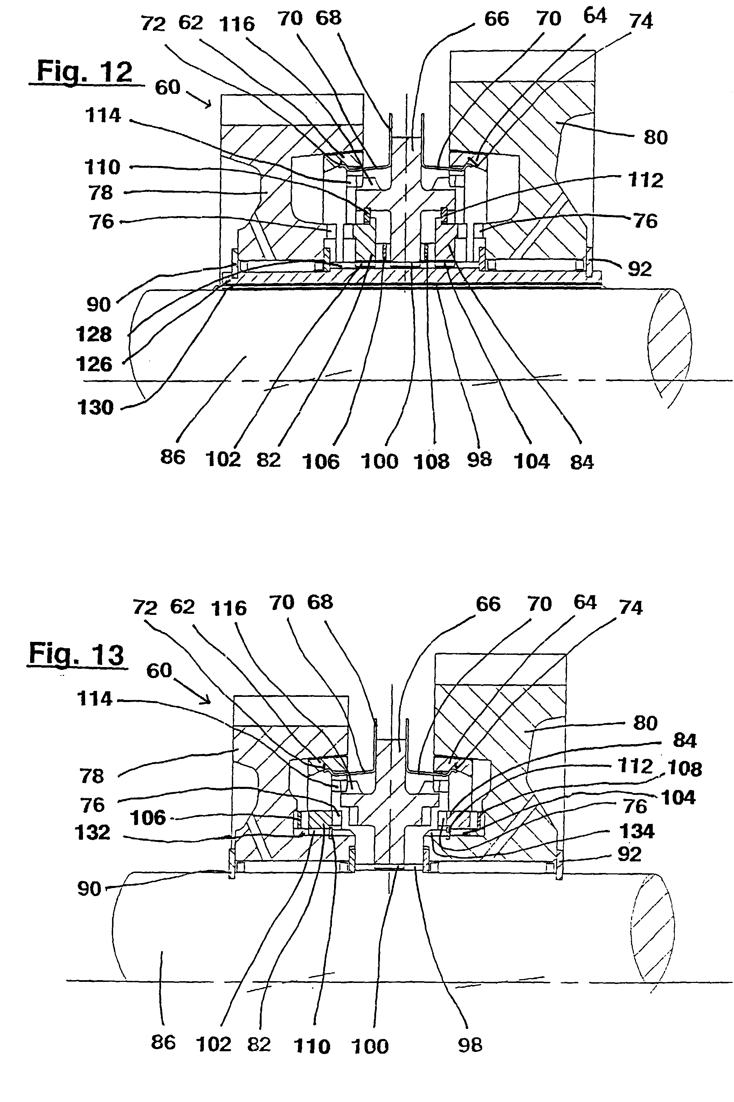

Eine weitere Ausgestaltung zeigt die Fig. 12. Dabei ist die Ausgestaltung gemäß Fig. 11 dahingehend geändert, daß zwischen der Welle 86 und den sonstigen Elementen der Synchronisierung 60 ein Zahnkranz 126 angeordnet ist. Der Zahnkranz 126 ist so ausgestaltet, daß er einen unverzahnten Bereich an seiner äußeren Oberfläche aufweist, auf dem die Zahnräder 78 und 80 um die Welle 86 frei drehbar gelagert sind. In einem Bereich der äußeren Oberfläche weist der Zahnkranz 126 eine Außenverzahnung 128 auf. Mit dieser Außenverzahnung 128 befinden sich die Innenverzahnung 100 der Schiebemuffe 66 und die Innenverzahnungen 102 und 104 der Kupplungsscheiben 82 und 84 im Eingriff. Eine Innenverzahnung 130 des Zahnkranzes 126 greift in die Außenverzahnung 98 der Welle 86 ein.

Die Fig. 13 zeigt eine Ausgestaltung der Erfindung, bei der, ausgehend von einer Anordnung nach Fig. 11, die Kupplungsscheiben 82 und 84 mit ihren Innenverzahnungen 102 und 104 auf Verzahnungen 132 bzw. 134 der Zahnräder 78 bzw. 80 axial bewegbar sind und ineinander eingreifen. Die Federelemente 106 und 108 sind hier zwischen den Zahnrädern 78, 80 und den Kupplungsscheiben 82, 84 angeordnet. Die Befestigungselemente 110 und 112 fixieren die Kupplungsscheiben 82, 84 hier bezüglich der Zahnräder 78 bzw. 80. Die Kupplungsverzahnung wird hier gebildet durch Verzahnungen 76 an den Kupplungsscheiben 82, 84 und an der Schiebemuffe 66. Die Zahnräder 76, 78 weisen in dieser Ausgestaltung keine Kupplungsverzahnung 76 auf. Die vorgesehene Kupplungsverzahnung 76 ist hier nicht bezüglich der Schiebemuffe 66 angefedert, sondern gegenüber den Zahnrädern 78, 80.

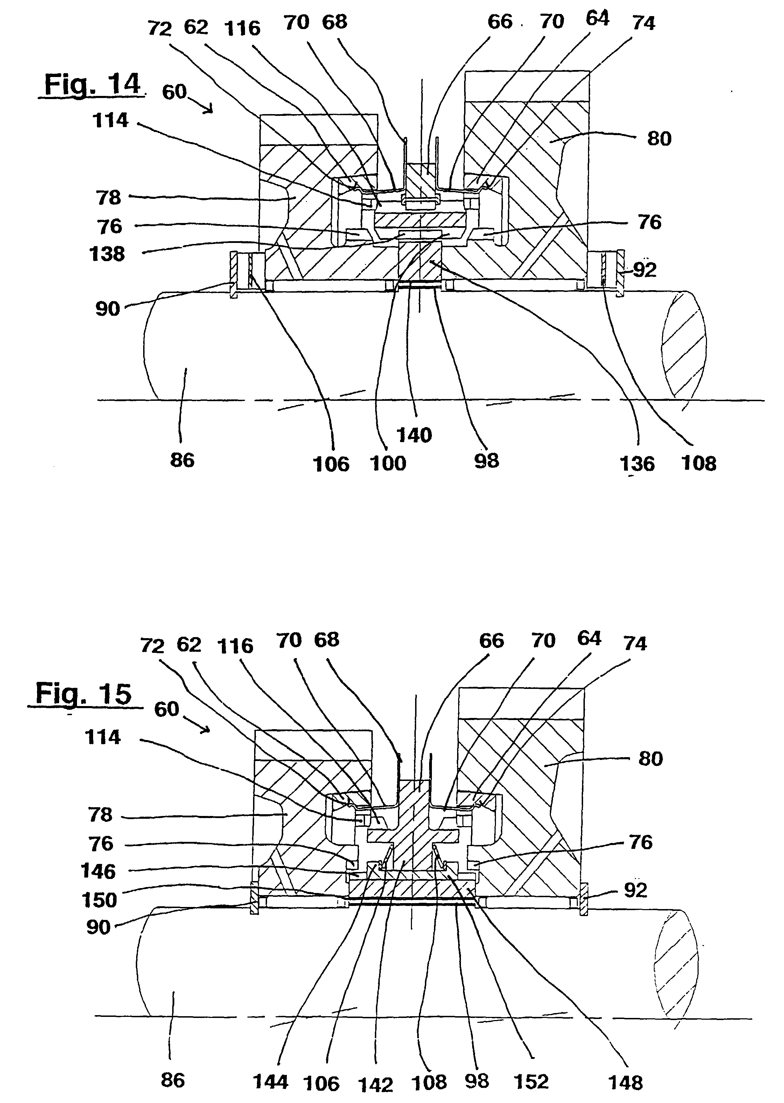

Wie die Fig. 14 zeigt, ist es auch möglich, die Kupplungsverzahnung 76 unter Zwischenschaltung der kompletten Zahnräder 78, 80 anzufedern. In dieser Ausgestaltung sind die Federelemente 106, 108 außerhalb der Zahnräder 78, 80 angeordnet und drücken die Zahnräder 78, 80 in axialer Richtung aneinander. Zwischen beiden Zahnrädern 78, 80 ist ein Zahnkranz 136 vorgesehen, der die axiale Bewegung der Zahnräder 78, 80 begrenzt. Der Zahnkranz 136 weist eine Außenverzahnung 138 und eine Innenverzahnung 140 auf. Die Außenverzahnung 138 greift in die Innenverzahnung 100 der Schiebemuffe 66 ein, die hier beispielsweise zweiteilig ausgeführt ist. Die Innenverzahnung 100 der Schiebemuffe 66 bildet hier gleichzeitig einen Teil der Kupplungsverzahnung 76. Der andere Teil der Kupplungsverzahnung 76 ist an den Zahnrädern 78, 80 angeordnet. Die Innenverzahnung 140 des Zahnkranzes 136 greift in die Außenverzahnung 98 der Welle 86 ein. Die Federelemente 106, 108 liegen einerseits an den Zahnrädern 78, 80 und andererseits an den Befestigungselementen 90, 92 an und stützen sich an diesen Befestigungselementen 90, 92 ab.

Eine weitere Ausgestaltung zeigt die Fig. 15. Auch hier ist die Schiebemuffe 66 zweigeteilt. Der radial außenliegende Teil 142 kann auf dem radial innenliegenden Teil 144 axial und um die Welle 86 herum gleiten. Der radial innenliegende Teil 144 der Schiebemuffe 66 ist durch eine Innenverzahnung 152 mit der Außenverzahnung 146 eines Zahnkranzes 148 verbunden, der wiederum mit seiner Innenverzahnung 150 in die Außenverzahnung 98 der Welle 86 eingreift. Durch diesen Zahnkranz 148 und die Befestigungselemente 90, 92 sind die Zahnräder 78, 80 axial fixiert. Die Kupplungsverzahnung 76 wird in dieser Ausführung einerseits von den Zahnrädern 78, 80 und andererseits von dem radial innenliegenden Teil 144 der Schiebemuffe 66 gebildet. Über Federelemente 106, 108 wird dieser Teil 144 bei axialer Bewegung des radial außenliegenden Teils 142 der Schiebemuffe 66 in die entsprechende axiale Richtung mitbewegt. Die Federelemente 106, 108 können in dieser Ausführung beispielsweise Federscheiben sein.

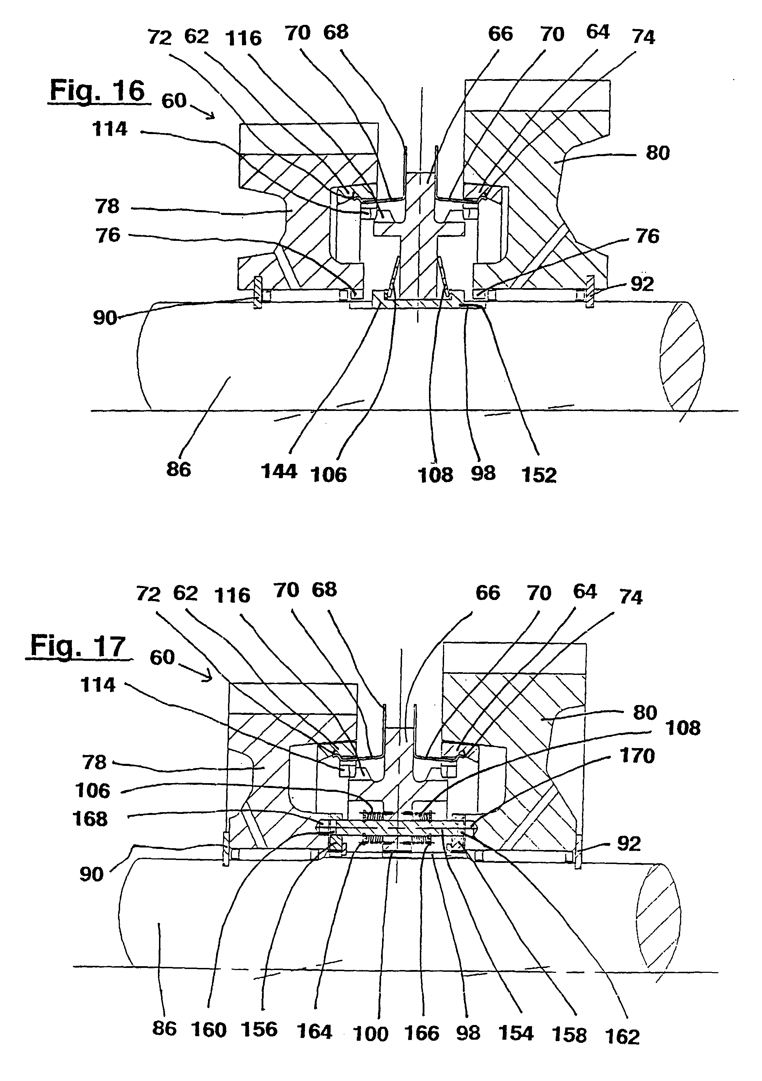

Ebenfalls Federscheiben können als Federelemente 106, 108 nach der Ausgestaltung nach Fig. 16 verwendet werden. Im Gegensatz zu Fig. 15 greift die Innenverzahnung 152 des radial innnenliegenden Teils 144 der Schiebemuffe 66 hier direkt in die Außenverzahnung 98 der Welle 86 ein.

Die Fig. 17 zeigt eine weitere Ausgestaltung der Erfindung, wobei die formschlüssige Verbindung von Zahnrad 78, 80 und Welle 86 durch Bolzen 154 vorgenommen wird. Diese Bolzen 154 sind axial beweglich in der Schiebemuffe 66 vorgesehen, wobei sie in ihrer axialen Bewegung bezüglich der Schiebemuffe 66 durch Federelemente 106, 108 begrenzt werden. Derartige Federelemente 106, 108 können in dieser Ausführungsform Spiralfedern sein, die die Bolzen 154 umschließen. Um die Welle 86 herum verteilt sind mehrere derartige Bolzen 154 vorgesehen. Zwischen der Schiebemuffe 66 und den Zahnrädern 78, 80 sind Scheiben 156, 158 zur Unterstützung der Momentenübertragung vorgesehen. Durch diese Scheiben 156, 158 ragen die Bolzen 154 in entsprechenden Ausnehmungen 160, 162 hindurch. Die Bolzen 154 wirken mit der Schiebemuffe 66 über die Federelemente 106, 108 zusammen, wobei auf den Bolzen 154 Befestigungselemente 164, 166, beispielsweise in Form von Sprengringen, vorgesehen sind. Die Federelemente 106, 108 liegen dann zwischen der Schiebemuffe 66 und jeweils einem Befestigungselement 164, 166. Zur Aufnahme der Bolzen 154 in den Zahnrädern 78, 80 sind in diesen Ausnehmungen 168, 170 vorgesehen. Beim Verschieben der Schiebemuffe 66, beispielsweise nach links, werden die Bolzen 154 über das Federelement 106 und das Befestigungselement 164 nach links verschoben. Dabei durchdringen die Bolzen 154 die Ausnehmungen 160 in der Scheibe 156 und legen sich an das Zahnrad 78 an, nachdem Gleichlauf zwischen Schiebemuffe 66 und Zahnrad 78 erzielt wurde. Liegen sich die Bolzen 154 und die Ausnehmungen 168 im Zahnrad 78 bereits zufällig gegenüber, dann können die Bolzen 154 in die Ausnehmungen 168 einspuren. Liegen sich Bolzen 154 und Ausnehmungen 168 nicht gegenüber, so wird bei der Anlage der Bolzen 154 an das Zahnrad 78 das Federelement 106 vorgespannt, so daß die Bolzen 154 in die Ausnehmungen 168 einspuren können, sobald sich das Zahnrad 78 beispielsweise durch Schleppmomente verdreht. Die Schiebemuffe 66 muß dafür nicht mehr bewegt werden. Der Fahrer spürt von dem späteren Einspuren nichts.

Bei einer breiter ausgestalteten Schiebemuffe 66 nach Fig. 18 können Bolzen 154 mit innerhalb der Schiebemuffe 66 angeordneten Federelementen 106, 108 abgefedert werden. Die Federelemente 106, 108 können als Spiralfedern ausgebildet sein. Bei einer breiten Schiebemuffe 66 kann auf Scheiben zur Unterstützung der Momentübertragung verzichtet werden. Die Bolzen 154 können unmittelbar in Ausnehmungen 168, 170 in den Zahnrädern 78, 80 einspuren, nachdem Gleichlauf von Schiebemuffe 66 und Zahnrad 78 bzw. 80 erzielt wurde.

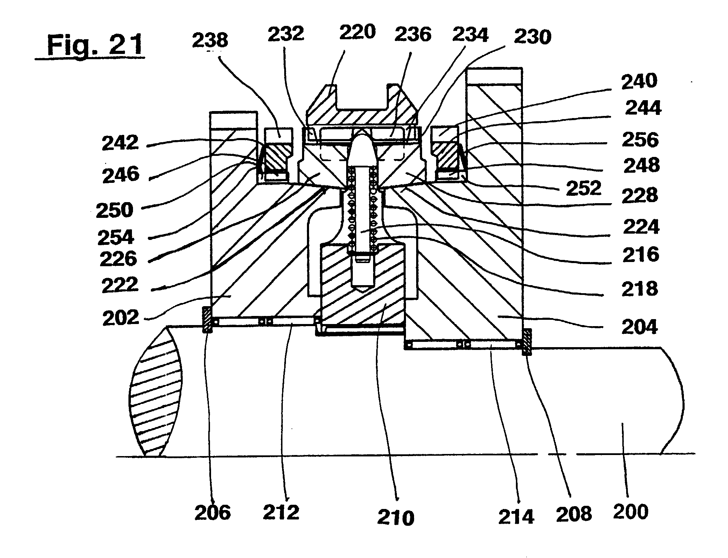

Die Fig. 20 geht aus von der Ausgestaltung der Erfindung nach Fig. 1 bis Fig. 8. Hier wird durch Einbau zweier Zwischenringe 172, 174 eine Dreifach-Synchronisierung realisiert. Der erste, radial innere Zwischenring 172 ist verdrehfest aber axial verschiebbar mit dem äußeren Synchronring 30 verbunden. Der zweite, radial äußere Zwischenring 174 ist verdrehfest aber axial verschiebbar mit der Schiebemuffe 8 verbunden. An äußerem Synchronring 30, erstem Zwischenring 172, zweitem Zwischenring 174 und der Schiebemuffe 8 liegen zusammen drei Reibbeläge vor. Durch die Ausführung als Außenkonussynchronisierung und durch den Einsatz von drei Reibbelägen kann bei vergleichbarer Reibbelagfläche ein erhöhtes Synchronmoment erreicht werden.

Die Fig. 21 zeigt eine weitere Ausgestaltung der Erfindung. Auf einer Welle 200 sind zwei Zahnräder 202 und 204 vorgesehen, die auf der Welle 200 axial durch Befestigungselemente 206, 208 und durch den zwischen den Zahnrädern 202, 204 liegenden Synchronkörper 210 fixiert sind. In Umfangsrichtung können die Zahnräder frei rotieren, wozu sie auf der Welle 200 durch Lager 212, 214 gelagert sind.

Im Synchronkörper 210, der auf der Welle 200 formschlüssig angeordnet ist, sind Rastenbolzen 216 vorgesehen, die durch Federelemente 218 gegen eine Schiebemuffe 220 gedrückt werden. An den Zahnrädern 202, 204 sind konische Reibflächen 222, 224 angebracht, die mit entsprechenden konischen Reibflächen an Synchronringen 226 und 228 korrespondieren. Die Synchronringe 226, 228 weisen eine Sperrverzahnung 230, 232 auf, die einer Sperrverzahnung an der Schiebemuffe 220 gegenübersteht. Die Innenverzahnung 234 der Schiebemuffe 220 greift in eine Außenverzahnung 236 des Synchronkörpers 210 ein. Ebenfalls kann die Innenverzahnung 234 in Außenverzahnungen 238, 240 an zwischen den Synchronringen 226, 228 und den Zahnrädern 202, 204 angeordneten Kupplungskörpern 242, 244 eingreifen. Die Enden der Innenverzahnung 234 sind ebenso wie die Enden der Außenverzahnungen 238, 240 stumpf ausgeführt. Die Innenverzahnungen 246, 248 der Kupplungskörper 242, 244 greifen in Außenverzahnungen 250, 252 an den Zahnrädern 202, 204 ein. Die Kupplungskörper 242, 244 werden durch Federelemente 254, 256 in Richtung auf die Schiebemuffe 220 angefedert.

Die dargestellten und beschriebenen Schaltbewegungen können sowohl von einem Fahrzeugführer, als auch von einer automatisierten Schalteinrichtung in einem automatisierten Schaltgetriebe ausgeführt werden.

Die beschriebenen Getriebeschaltungen zeichnen sich bei hoher Sperrsicherheit durch eine geringe erforderliche Schaltkraft aus. Das Schaltgefühl für den Fahrzeugführer wird verbessert, der Schaltkraftverlauf fällt gleichmäßiger aus.

Im Gegensatz zu bestehenden Getriebeschaltungen können mit erfindungsgemäßer Getriebeschaltung die Schaltkräfte reduziert werden. Bei gleichem Schaltweg am Schalthebel verringert sich die notwendige Schaltkraft um ca. 40 %. Diese Schaltkraftreduzierung ergibt sich aus Schaltwegverkürzung und Durchmesservergrößerung des Reibkegels.

Der Schaltweg der neuartigen Getriebeschaltung konnte aufgrund der stumpfen Einspurverzahnung von 10 mm auf 7 mm verringert werden. Die Übersetzung des Schaltgestänges kann um 40 % angehoben werden, ohne den Schaltweg am Schalthebel zu erhöhen. Die Schaltkraftreduzierung aufgrund der geänderten Gestängeübersetzung beträgt somit ca. 30 %.

Die Anforderung an eine Getriebeschaltung, daß eine formschlüssige Verbindung zwischen Welle und Zahnrad auch bei Ausfall der Synchronisierungsfunktion herstellbar sein soll und es dem Fahrer möglich sein muß, auch bei hohen Differenzdrehzahlen unabhängig von Einrastmechanismus mit erhöhter Handkraft das Einspuren des Kupplungskörpers zu erzielen, wird erfüllt. Zwischen der "Haltestellung" und dem eingeschalteten Zustand steht eine Schaltreserve von ca. 1 mm zur Verfügung. Das Synchronpaket kann damit bei einer Fehlfunktion wie eine Klauenschaltung mit stumpfer Einspurverzahnung geschaltet werden.

Neben den hier beschriebenen Federungselementen 26, 28, 106, 108, 254, 256 kann auch jedes andere elastische Element, das in der Lage ist, die mit Hilfe der Schaltkraft eingeleitete Energie aufzunehmen, die Aufgabe der besprochenen Federungselemente wahrnehmen. Dieses elastische Element muß sich dabei nicht in unmittelbarer Nähe der Synchronisiereinrichtung befinden. Möglich ist auch, daß das elastische Element Bestandteil des Schaltgestänges ist oder an diesem angeordnet ist. Als elastische Elemente kommen beispielsweise Federscheiben, Wellenscheiben, Luftfedern, Torsionsfedern, Gummielemente etc. in Betracht. Die Torsionsfedern können dabei so ausgelegt sein, daß sie auf die Kupplungsverzahnung nicht nur eine axiale Anfederung vornehmen, sondern gleichzeitig auch ein Verdrehen der Kupplungsverzahnung vornehmen.

Zur Vermeidung von Rasselgeräuschen im Getriebe können die elastischen Elemente unter einer bestimmten Vorspannung gehalten werden, die ein ungewolltes freies Spiel der Synchronisiereinrichtungselemente vermeidet.

### Bezugszeichen

- 2: Sperrsynchronisierung
- 4: Synchronkörper
- 6: Rastenbolzen
- 8: Schiebemuffe
- 10: Achse
- 12: Ausnehmungen
- 14: Vorsprünge
- 16: innerer Synchronring
- 18: innerer Synchronring
- 20: Blattfeder
- 22: Kupplungskörper
- 24: Kupplungskörper
- 26: Wellfeder
- 28: Wellfeder
- 30: äußerer Synchronring
- 32: äußerer Synchronring
- 34: Reibfläche
- 36: Reibfläche
- 38: Druckfeder
- 40: Schweißnaht
- 42: Zahnrad
- 44: Zahnrad
- 46: Sperrverzahnung
- 48: Schaltkraft
- 50: Sperrfläche
- 52: Sperrfläche
- 54: Sperrfläche
- 56: Sperrfläche
- 58: Federkraft
- 60: Synchronisiereinrichtung
- 62: Synchronring
- 64: Synchronring
- 66: Schiebemuffe
- 68: Blechkranz
- 70: Zunge
- 72: Rille
- 74: Rille
- 76: Kupplungsverzahnung
- 78: Zahnrad
- 80: Zahnrad
- 82: Kupplungsscheibe
- 84: Kupplungsscheibe
- 86: Getriebewelle
- 88: Zahnkranz
- 90: Befestigungselement
- 92: Befestigungselement
- 94: Innenverzahnung
- 96: Außenverzahnung
- 98: Außenverzahnung
- 100: Innenverzahnung
- 102: Innenverzahnung
- 104: Innenverzahnung
- 106: Federelement
- 108: Federelement
- 110: Ringelement
- 112: Ringelement
- 114: Sperrzähne
- 116: Sperrzähne
- 118: Anschlag
- 120: Anschlag
- 122: Befestigungselement
- 124: Befestigungselement
- 126: Zahnkranz
- 128: Außenverzahnung
- 130: Innenverzahnung
- 132: Verzahnung
- 134: Verzahnung
- 136: Zahnkranz
- 138: Außenverzahnung
- 140: Innenverzahnung
- 142: Teil der Schiebemuffe
- 144: Teil der Schiebemuffe
- 146: Außenverzahnung
- 148: Zahnkranz
- 150: Innenverzahnung
- 152: Innenverzahnung
- 154: Bolzen
- 156: Scheibe
- 158: Scheibe
- 160: Ausnehmung
- 162: Ausnehmung
- 164: Befestigungselement
- 166: Befestigungselement
- 168: Ausnehmung
- 170: Ausnehmung
- 172: Zwischenring
- 174: Zwischenring
- 200: Welle
- 202: Zahnrad
- 204: Zahnrad
- 206: Befestigungselement
- 208: Befestigungselement
- 210: Synchronkörper
- 212: Lager
- 214: Lager
- 216: Rastenbolzen
- 218: Federelement
- 220: Schiebemuffe
- 222: konische Reibfläche
- 224: konische Reibfläche
- 226: Synchronring
- 228: Synchronring
- 230: Sperrverzahnung
- 232: Sperrverzahnung
- 234: Innenverzahnung
- 236: Außenverzahnung
- 238: Außenverzahnung
- 240: Außenverzahnung
- 242: Kupplungskörper
- 244: Kupplungskörper
- 246: Innenverzahnung
- 248: Innenverzahnung
- 250: Außenverzahnung
- 252: Außenverzahnung
- 254: Federelement
- 256: Federelement
- 352: Welle
- 354: Schaltkraftverlauf bekannter Getriebeschaltung
- 356: Schaltkraftverlauf erfindungsgemäßer Getriebeschaltung

## Patentansprüche

1. Getriebeschaltung mit Sperrsynchronisierung, bei welcher ein mit einer Getriebewelle (86) verbundener Synchronkörper (4) und wenigstens ein mit unterschiedlicher Drehzahl rotierendes Zahnrad (42, 44, 202, 204) mit Hilfe einer durch eine Schaltkraft axial verschiebbaren, ringförmigen Schiebemuffe (8, 66, 220) bei Gleichlauf formschlüssig zusammenkuppelbar ist,
wobei eine Kupplungsvorrichtung (234) der Schiebemuffe (8, 66, 220) in eine entsprechende Kupplungsvorrichtung (238, 240) jedes kuppelbaren Zahnrades (42, 44, 202, 204) oder eines mit jedem kuppelbaren Zahnrad (42, 44, 202, 204) verbundenen Kupplungskörpers (22, 24, 242, 244) eingreift und einem gegenüber der Schiebemuffe (8, 66, 220) begrenzt verdrehbaren Synchronring (16, 18) für jedes der kuppelbaren Zahnräder,
wobei Teile des Synchronringes (16, 18) mit Teilen, die mit dem Zahnrad verbunden oder an diesem vorgesehen sind, eine kraftschlüssige Kupplung bilden und bei Nichtsynchronismus über Blockierungsflächen einer Sperrverzahnung (114, 116) die axiale Bewegung der Schiebemuffe (8, 66, 220) gesperrt wird,
dadurch **gekennzeichnet,** daß
- der Kupplungskörper (22, 24, 242, 244) oder das kuppelbare Zahnrad (42, 44, 202, 204) eine stumpfe Kupplungsvorrichtung (238, 240), d. h. mit keinerlei Anschrägungen, aufweist, die mit einer ebenfalls stumpfen Kupplungsvorrichtung (154, 234) an der Schiebemuffe (8, 66, 220) korrespondiert und
- eine der Kupplungsvorrichtungen von Kupplungskörpern (22, 24, 242, 244), kuppelbarem Zahnrad (42, 44, 202, 204) oder Schiebemuffe (8, 66, 220) in Richtung auf die Schiebemuffe (8, 66, 220) durch ein elastisches Element (26, 28, 254, 256) angefedert ist.

2. Getriebeschaltung nach Anspruch 1, dadurch **gekennzeichnet,** daß die stumpfen Kupplungsvorrichtungen stumpfe Kupplungsverzahnungen (238, 240) sind.

3. Getriebeschaltung mit Sperrsynchronisierung nach Anspruch 1 oder 2, dadurch **gekennzeichnet**, daß der Synchronring (16) zwischen Schiebemuffe (8) und dem zu kuppelnden Zahnrad mit einem zweiten Synchronring (18) zwischen Schiebemuffe (8) und einem zweiten, alternativ zu kuppelnden Zahnrad über Vorsprünge (14) verbunden ist, an denen die Sperrverzahnung vorgesehen ist.

4. Getriebeschaltung mit Sperrsynchronisierung nach einem der Ansprüche 1 bis 3, dadurch **gekennzeichnet,** daß der Synchronring (16, 18) und ein weiterer Synchronring (30, 32), der mit dem kuppelbaren Zahnrad (42, 44) verbunden ist, Reibflächen (34, 36) aufweisen, die die kraftschlüssige Kupplung bilden.

5. Getriebeschaltung mit Sperrsynchronisierung nach einem der Ansprüche 1 bis 3, dadurch **gekennzeichnet,** daß der Synchronring (16, 18, 226, 228) und das kuppelbare Zahnrad (42, 44, 202, 204) oder die damit verbundenen Kupplungskörper (242, 244) Reibflächen (222, 224) aufweisen, die die kraftschlüssige Kupplung bilden.

6. Getriebeschaltung mit Sperrsynchronisierung nach einem der Ansprüche 1 bis 4, dadurch **gekennzeichnet,** daß die Reibflächen (34) am Synchronring (16, 18) radial außen liegen und mit radial innenliegenden Reibflächen (36) vom zweiten Synchronring (30, 32) oder dem kuppelbaren Zahnrad (42, 44) die kraftschlüssige Kuppung bilden.

7. Getriebeschaltung mit Sperrsynchronisierung nach einem der Ansprüche 1 bis 6, dadurch **gekennzeichnet,** daß zwischen den Reibflächen (34) am Synchronring (16, 18, 226, 228) und den Reibflächen (36) am zweiten Synchronring (30, 32) oder am kuppelbaren Zahnrad (222, 224) wenigstens ein Zwischenring (172, 174) mit einer radial innenliegenden und einer radial außenliegenden Reibfläche vorgesehen ist.

8. Getriebeschaltung mit Sperrsynchronisierung nach einem der Ansprüche 1 bis 7, dadurch **gekennzeichnet,** daß im Synchronkörper (4) federbelastete Rastenbolzen (6, 216) angeordnet sind, an denen Anschrägungen vorgesehen sind, die in einer Neutralstellung der Schiebemuffe (8, 220) in Einkerbungen in der Schiebemuffe (8, 220) und in einer Endstellung im geschalteten Gang an Randflächen der Schiebemuffe (8, 220) liegen.

9. Getriebeschaltung mit Sperrsynchronisierung nach wenigstens einem der vorherigen Ansprüche, dadurch **gekennzeichnet,** daß die Synchronringe (16, 18) durch Federelemente (20) relativ zur Schiebemuffe (8) gehalten sind.

10. Getriebeschaltung mit Sperrsynchronisierung nach Anspruch 9, dadurch **gekennzeichnet**, daß die Federelemente (20) Blattfedern sind.

11. Getriebeschaltung mit Sperrsynchronisierung nach einem der vorherigen Ansprüche, dadurch **gekennzeichnet,** daß zwischen Schiebemuffe (66) und jedem Zahnrad (78, 80) eine Kupplungsscheibe (82, 84) vorgesehen ist, die die Kupplungsvorrichtung (76) aufweist.

12. Getriebeschaltung mit Sperrsynchronisierung nach Anspruch 11, dadurch **gekennzeichnet**, daß zwischen der Getriebewelle (86) und der Schiebemuffe (66) sowie den Kupplungsscheiben (82, 84) ein Zahnkranz (88) vorgesehen ist, dessen Innenverzahnung (94) in die Außenverzahnung (98) der Getriebewelle (86) eingreift und dessen Außenverzahnung (96) in die Innenverzahnungen (100) der Scheibemuffe (66, 102, 104) und der Kupplungsscheiben (82, 84) eingreift.

13. Getriebeschaltung mit Sperrsynchronisierung nach Anspruch 12, dadurch **gekennzeichnet**, daß auf dem Zahnkranz (88) die zu kuppelnden Zahnräder (78, 80) axial fixiert und in Umfangsrichtung frei beweglich gelagert sind.

14. Getriebeschaltung mit Sperrsynchronisierung nach Anspruch 11, dadurch **gekennzeichnet**, daß die Kupplungsscheiben (82, 84) mit ihren Innenverzahnungen (102, 104)) auf Verzahnungen (132, 134) an den Zahnrädern (78, 80) axial beweglich angeordnet sind und die elastischen Elemente (106, 108) zwischen Zahnrad (78, 80) und Kupplungsscheibe (82, 84) vorgesehen sind.

15. Getriebeschaltung mit Sperrsynchronisierung nach einem der Ansprüche 1 bis 10, dadurch **gekennzeichnet,** daß die elastischen Elemente (106, 108) axial außerhalb der Zahnräder (78, 80) angeordnet sind und die Zahnräder (78, 80) axial beweglich sind.

16. Getriebeschaltung mit Sperrsynchronisierung nach einem der Ansprüche 1 bis 10, dadurch **gekennzeichnet,** daß die Schiebemuffe (66) zweigeteilt ist, wobei der radial innenliegende Teil (144), der die Kupplungsverzahnung (76) aufweist, mit der Getriebewelle (86) formschlüssig verbunden ist, während der radial außenliegende Teil (142) der Schiebemuffe (66) auf dem radial innenliegenden Teil (144) in axialer Richtung und in Umfangsrichtung frei beweglich ist.

17. Getriebeschaltung mit Sperrsynchronisierung nach Anspruch 1, dadurch **gekennzeichnet**, daß die stumpfe Kupplungsvorrichtung an der Schiebemuffe (66) Bolzen (154) sind, die in die Kupplungsvorrichtungen an den Zahnrädern (78, 80) in Form von Ausnehmungen (168, 170) eingreifen können, und elastische Elemente (106, 108) vorgesehen sind, die die Bolzen (154) relativ zur Schiebemuffe (66) anfedern.

18. Getriebeschaltung mit Sperrsynchronisierung nach Anspruch 17, dadurch **gekennzeichnet**, daß zwischen Schiebemuffe (66) und Zahnrädern (78, 80) Scheiben (156, 158) zur Unterstützung der Momentenübertragung vorgesehen sind, wobei die Bolzen (154) durch Ausnehmungen (160, 162) in den Scheiben (156, 158) hindurchragen.

19. Getriebeschaltung mit Sperrsynchronisierung nach Anspruch 17 oder 18, dadurch **gekennzeichnet**, daß die elastischen Elemente (106, 108) Spiralfedern sind.

20. Getriebeschaltung mit Sperrsynchronisierung nach wenigstens einem der Ansprüche 1 bis 18, dadurch **gekennzeichnet,** daß die elastischen Elemente (26, 28, 106, 108) Wellfedern sind.

21. Getriebeschaltung mit Sperrsynchronisierung nach wenigstens einem der Ansprüche 1 bis 18, dadurch **gekennzeichnet,** daß die elastischen Elemente (26, 28, 106, 108) Federscheiben sind.

22. Getriebeschaltung mit Sperrsynchronisierung nach wenigstens einem der vorherigen Ansprüche, dadurch **gekennzeichnet,** daß die elastischen Elemente (26, 28, 106, 108, 254, 256) unter Vorspannung stehen.

23. Getriebeschaltung mit Sperrsynchronisierung nach wenigstens einem der vorherigen Ansprüche, dadurch **gekennzeichnet,** daß die elastischen Elemente am Schaltgestänge angeordnet sind oder Bestandteil des Schaltgestänges sind.

24. Getriebeschaltung mit Sperrsynchronisierung nach wenigstens einem der vorherigen Ansprüche, dadurch **gekennzeichnet,** daß die Schaltkraft (48) zur Betätigung der Getriebeschaltung durch Schaltmittel aufgebracht wird.

25. Getriebeschaltung mit Sperrsynchronisierung nach Anspruch 24, dadurch **gekennzeichnet**, daß die Schaltmittel pneumatisch sind.

26. Getriebeschaltung mit Sperrsynchronisierung nach Anspruch 24, dadurch **gekennzeichnet**, daß die Schaltmittel elektrisch sind.

27. Getriebeschaltung mit Sperrsynchronisierung nach einem der Ansprüche 24 bis 26, dadurch **gekennzeichnet,** daß die Ansteuerung der Schaltmittel automatisch erfolgt.

## Claims

1. Gearbox control system with locking synchronization whereby a synchronizer body (4) connected to a transmission shaft (86) and at least one gearwheel (42, 44, 202, 204) rotating at a different speed can be positively coupled at synchronous speed by means of a ring-shaped sliding sleeve (8, 66, 220) axially displaceable via shift load;
whereby a coupling device (234) of the sliding sleeve (8, 66, 220) engages with a corresponding coupling device (238, 240) of each engagable gearwheel (42, 44, 202, 204) or with a clutch body (22, 24, 242, 244) connected to each engagable gearwheel (42, 44, 202, 204) and with one synchronizer ring (16 ,18) - with limited rotation in relation to the sliding sleeve (8, 66, 220) - for each engagable gearwheel;
with parts of the synchronizer ring (16, 18) bringing about friction-type locking with parts that are connected to the gearwheel or provided for it, and with the axial movement of the sliding sleeve (8, 66, 220) being arrested by means of the locking surfaces of a locking gear (114, 116) when non-synchronism occurs;
**characterized** in that
- the clutch body (22, 24, 242, 244) or the engagable gearwheel (42, 44, 202, 204) has a blunt coupling device (238, 240), i.e. with no chamfer whatsoever, which corresponds with a likewise blunt coupling device (154, 234) on the sliding sleeve (8, 66, 220) and
- one of the coupling devices on the clutch bodies (22, 24, 242, 244), engagable gearwheel (42, 44, 202, 204) or sliding sleeve (8, 66, 220) is spring-loaded by means of an elastic element (26, 28, 254, 256) in relation to the sliding sleeve (8, 66, 220).

2. Gearbox control system according to claim 1, **characterized** in that the blunt coupling devices are blunt clutch gears (238, 240).

3. Gearbox control system with locking synchronization according to claim 1 or 2, **characterized** in that the synchronizer ring (16) between sliding sleeve (8) and the gearwheel to be engaged is connected by means of projections (14) - on which locking gears are provided - to a second synchronizer ring (18) between sliding sleeve (8) and a second gearwheel, alternatively to be engaged.

4. Gearbox control system with locking synchronization according to one of the claims 1 to 3, **characterized** in that the synchronizer ring (16, 18) and another synchronizer ring (30, 32), which is connected to the engagable gearwheel (42, 44), have friction surfaces (34, 36) bringing about friction-type locking engagement.

5. Gearbox control system with locking synchronization according to one of the claims 1 to 3, **characterized** in that the synchronizer ring (16, 18, 226, 228) and the engagable gearwheel (42, 44, 202, 204) or the clutch bodies connected to it (242, 244) have friction surfaces (222, 224) bringing about friction-type locking engagement.

6. Gearbox control system with locking synchronization according to one of the claims 1 to 4, **characterized** in that the friction surfaces (34) are found on the radially outer side of the synchronizer ring (16, 18) and bring about friction-type locking with the friction surfaces (36) of the second synchronizer ring (30, 32) on its radially inner side or with the engagable gearwheel (42, 44).

7. Gearbox control system with locking synchronization according to one of the claims 1 to 6, **characterized** in that between the friction surfaces (34) on the synchronizer ring (16, 18, 226, 228) and the friction surfaces (36) on the second synchronizer ring (30, 32) or on the engagable gearwheel (222, 224), at least one intermediate ring (172, 174) with a radially inner and a radially outer friction surface is provided.

8. Gearbox control system with locking synchronization according to one of the claims 1 to 7, **characterized** in that spring-loaded stop bolts (6, 216) are arranged in the synchronizer body (4), on which chamfers are provided, which in neutral position of the sliding sleeve (8, 220) rest in notches of the sliding sleeve (8, 220) and in end position of a shifted gear are in contact with the edge surfaces of the sliding sleeve (8, 220).

9. Gearbox control system with locking synchronization according to at least one of the above claims, **characterized** in that the synchronizer rings (16, 18) are fixed by means of spring elements (20) in a position relative to the sliding sleeve (8).

10. Gearbox control system with locking synchronization according to claim 9, **characterized** in that the spring elements (20) are flat springs.

11. Gearbox control system with locking synchronization according to one of the above claims, **characterized** in that between sliding sleeve (66) and each gearwheel (78, 80) there is a clutch disk (82, 84) provided with the coupling device (76).

12. Gearbox control system with locking synchronization according to claim 11, **characterized** in that between the transmission shaft (86) and the sliding sleeve (66) as well as the clutch disks (82, 84) there is a ring gear (88), whose internal gearing (94) engages with the external gearing (98) of the transmission shaft (86) and whose external gearing (96) engages with the internal gearing (100) of the sliding sleeve (66, 102, 104) and the clutch disks (82, 84).

13. Gearbox control system with locking synchronization according to claim 12, **characterized** in that the gearwheels to be engaged (78, 80) are axially fixed on the ring gear (88) and mounted to be freely movable in circumferential direction.

14. Gearbox control system with locking synchronization according to claim 11, **characterized** in that the clutch disks (82, 84) with internal gearings (102, 104) are axially movably arranged on gearings (132, 134) on the gearwheels (78, 80) and that the elastic elements (106, 108) are found between gearwheel (78, 80) and clutch disk (82, 84).

15. Gearbox control system with locking synchronization according to one of the claims 1 to 10, **characterized** in that the elastic elements (106, 108) are arranged axially outside the gearwheels (78, 80) and the gearwheels (78, 80) are axially movable.

16. Gearbox control system with locking synchronization according to one of the claims 1 to 10, **characterized** in that the sliding sleeve (66) is bisectional, with the radially inward section (144), which is provided with the clutch teeth (76), forming a friction-type lock with the transmission shaft (86), while the radially outward section (142) of the sliding sleeve (66) is freely movable in circumferential and axial direction on the radially inward section (144).

17. Gearbox control system with locking synchronization according to claim 1, **characterized** in that the blunt coupling device on the sliding sleeve (66) is made up of bolts (154) which can engage with the coupling devices - in the form of recesses (169, 170) - on the gearwheels (78, 89), and that there are elastic elements (106, 108) exerting spring action on the bolts (154) relative to the sliding sleeve (66).

18. Gearbox control system with locking synchronization according to claim 17, **characterized** in that there are disks (156, 158) for torque-transmission support between sliding sleeve (66) and gearwheels (78, 80), whereby the bolts (154) project through recesses (160, 162) in the disks (156, 158).

19. Gearbox control system with locking synchronization according to claim 17 or 18, **characterized** in that the elastic elements (106, 108) are spiral springs.

20. Gearbox control system with locking synchronization according to at least one of the claims 1 to 18, **characterized** in that the elastic elements (26, 28, 106, 108) are wave springs.

21. Gearbox control system with locking synchronization according to at least one of the claims 1 to 18, **characterized** in that the elastic elements (26, 28, 106, 108) are spring plates.

22. Gearbox control system with locking synchronization according to at least one of the above claims, **characterized** in that the elastic elements (26, 28, 106, 108, 254, 256) are under pre-load.

23. Gearbox control system with locking synchronization according to at least one of the above claims, **characterized** in that the elastic elements are arranged on the shift linkage or are part of the shift linkage.

24. Gearbox control system with locking synchronization according to at least one of the above claims, **characterized** in that the shift load (48) for shift activation is provided by shift means.

25. Gearbox control system with locking synchronization according to claim 24, **characterized** in that the shift means are pneumatic.

26. Gearbox control system with locking synchronization according to claim 24, **characterized** in that the shift means are electrical.

27. Gearbox control system with locking synchronization according to one of the claims 24 to 26, **characterized** in that the shift means are automatically actuated.

## Revendications

1. Système de changement de vitesses à synchronisation à verrouillage dans lequel un organe de synchronisation (4) relié à un arbre (86) de la boîte de vitesses et au moins une roue dentée (42, 44, 202, 204) tournant à une vitesse de rotation différente peuvent être embrayés par fermeture géométrique en marche synchrone par l'intermédiaire d'un manchon coulissant annulaire (8, 66, 220) pouvant coulisser dans le sens axial par une force de commande,
dans lequel un dispositif d'embrayage (234) du manchon coulissant (8, 66, 220) s'engrène dans un dispositif d'embrayage correspondant (238, 240) de chaque roue dentée embrayable (42, 44, 202, 204) ou d'un organe d'embrayage (22, 24, 242, 244) relié à chaque roue dentée embrayable (42, 44, 202, 204) et une bague de synchronisation (16, 18) mobile en rotation pour chacune des roues dentées embrayables limitée par le manchon annulaire (8, 66,220),
dans lequel des éléments de la bague de synchronisation (16, 18) reliés à la roue dentée ou prévus sur celle-ci forment un embrayage par fermeture géométrique, et en cas de non-synchronisation, le mouvement axial du manchon coulissant (8, 66, 220) est verrouillé par l'intermédiaire des surfaces de blocage présentes sur une denture de verrouillage (114, 116),
**caractérisé** en ce que
- l'organe d'embrayage (22, 24, 242, 244) ou la roue dentée embrayable (42, 44, 202, 204) comporte un dispositif d'embrayage tronqué (238, 240), c'est-à-dire sans aucun chanfrein, qui concourt avec un dispositif d'embrayage également tronqué (154, 234) sur le manchon coulissant (8, 66, 220) et
- un des dispositifs d'embrayage d'organes d'embrayage (22, 24, 242, 244), roue dentée embrayable (42, 44, 202, 204) ou manchon coulissant (8, 66, 220) est élastique dans la direction du manchon coulissant (8, 66, 220) par l'action d'un élément élastique (26, 28, 254, 256).

2. Système de changement de vitesses selon la revendication 1, **caractérisé** en ce que les dispositifs d'embrayage tronqués sont des dentures tronquées (238, 240) d'embrayage.

3. Système de changement de vitesses à synchronisation à verrouillage selon la revendication 1 ou 2, **caractérisé** en ce que la bague de synchronisation (16) entre le manchon coulissant (8) et la roue dentée à embrayer est reliée à une deuxième bague de synchronisation (18) entre le manchon coulissant (8) et une deuxième roue dentée à embrayer en alternance avec la roue dentée par des parties en saillie (14) sur lesquelles est prévue la denture de verrouillage.

4. Système de changement de vitesses à synchronisation à verrouillage selon l'une des revendications 1 à 3, **caractérisé** en ce que la bague de synchronisation (16, 18) et une autre bague de synchronisation (30, 32) reliée à la roue dentée embrayable (42, 44) présentent des surfaces frottantes (34, 36) qui forment l'embrayage entraîné par adhérence.

5. Système de changement de vitesses à synchronisation à verrouillage selon l'une des revendications 1 à 3, **caractérisé en ce** que la bague de synchronisation (16, 18, 226, 228) et la roue dentée embrayable (42, 44, 202, 204) ou les organes d'embrayage (242, 244) reliés à celle-ci présentent des surfaces frottantes (222, 224) qui forment l'embrayage entraîné par adhérence.

6. Système de changement de vitesses à synchronisation à verrouillage selon l'une des revendications 1 à 4, **caractérisé** en ce que les surfaces frottantes (34) se trouvent sur la bague de synchronisation (16, 18) radialement vers l'extérieur et forment avec les surfaces frottantes (36) disposées radialement vers l'intérieur de la deuxième bague de synchronisation (30, 32) ou avec la roue dentée embrayable (42, 44), l'embrayage entraîné par adhérence.

7. Système de changement de vitesses à synchronisation à verrouillage selon l'une des revendications 1 à 6, **caractérisé** en ce qu'entre les surfaces frottantes (34) sur la bague de synchronisation (16, 18, 226, 228) et les surfaces frottantes (36) sur la deuxième bague de synchronisation (30, 32) ou sur la roue dentée embrayable (22, 224) est prévue au moins une bague intermédiaire (172, 174) comportant une surface frottante se trouvant radialement à l'intérieur et une surface frottante se trouvant radialement à l'extérieur.

8. Système de changement de vitesses à synchronisation à verrouillage selon l'une des revendications 1 à 7, **caractérisé** en ce que dans l'organe de synchronisation (4) sont agencés des boulons à crans (6, 216) commandés par ressorts sur lesquels sont prévus des chanfreins qui se trouvent dans une position neutre du manchon coulissant (8, 220) dans des encoches prévues dans le manchon coulissant (8, 220) et dans une position finale dans la vitesse engagée, sur les surfaces de bord du manchon coulissant (8, 220).

9. Système de changement de vitesses à synchronisation à verrouillage selon l'une des revendications précédentes, **caractérisé** en ce que les bagues de synchronisation (16, 18) sont maintenues par des éléments ressort (20) par rapport au manchon coulissant (8).

10. Système de changement de vitesses à synchronisation à verrouillage selon la revendication 9, **caractérisé** en ce que les éléments ressort (20) sont des ressorts à lames.

11. Système de changement de vitesses à synchronisation à verrouillage selon l'une des revendications précédentes, **caractérisé** en ce qu'entre le manchon coulissant (66) et chaque roue dentée (78, 80) est prévu un disque d'embrayage (82, 84) qui forme le dispositif d'embrayage (76).

12. Système de changement de vitesses à synchronisation à verrouillage selon la revendication 11, **caractérisé** en ce qu'entre l'arbre de transmission (86) et le manchon coulissant (66) ainsi que les disques d'embrayage (82, 84) est prévue une couronne dentée (88) dont la denture intérieure (94) s'engrène dans la denture extérieure (98) de l'arbre de transmission (86) et dont la denture extérieure (96) s'engrène dans les dentures intérieures (100) du manchon coulissant (66, 102, 104) et des disques d'embrayage (82, 84).

13. Système de changement de vitesses à synchronisation à verrouillage selon la revendication 12, **caractérisé** en ce que sur la couronne dentée (88), les roues dentées embrayables (78, 80) sont fixées dans le sens axial et montées de façon à être mobiles dans le sens circonférentiel.

14. Système de changement de vitesses à synchronisation à verrouillage selon la revendication 11, **caractérisé** en ce que les disques d'embrayage (82, 84), par leurs dentures intérieures (102, 104), sont disposés de façon à être axialement mobiles sur des dentures (132, 134) sur les roues dentées (78, 80) et les éléments élastiques (106, 108) sont prévus entre roue dentée (78, 80) et disque d'embrayage (82, 84).

15. Système de changement de vitesses à synchronisation à verrouillage selon les revendications 1 à 10, **caractérisé** en ce que les éléments élastiques (106, 108) sont disposés axialement en dehors des roues dentées (78, 80) et les roues dentées (78, 80) sont axialement mobiles.

16. Système de changement de vitesses à synchronisation à verrouillage selon les revendications 1 à 10, **caractérisé** en ce que le manchon coulissant (66) est séparé en deux parties, la partie se trouvant radialement à l'intérieur (144) et présentant la denture d'embrayage (76) étant reliée par fermeture géométrique à l'arbre de transmission (86), tandis que la partie se trouvant radialement à l'extérieur (142) du manchon coulissant (66) est mobile dans le sens axial et dans le sens circonférentiel sur la partie se trouvant radialement à l'intérieur (144).

17. Système de changement de vitesses à synchronisation à verrouillage selon la revendication 1, **caractérisé** en ce que le dispositif tronqué d'embrayage sur le manchon coulissant (66) est constitué par des boulons (154) pouvant s'engrener dans les dispositifs d'embrayage sur les roues dentées (78, 80) en forme d'évidements (168, 170) et que des éléments élastiques (106, 108) sont prévus qui soumettent les boulons (154) à la charge de ressorts par rapport au manchon coulissant (66).

18. Système de changement de vitesses à synchronisation à verrouillage selon la revendication 17, **caractérisé** en ce qu'entre le manchon coulissant (66) et les roues dentées (78, 80) sont prévus des disques (156, 158) pour renforcer la transmission du couple, les boulons (154) passant à travers des évidements (160, 162) dans les disques (156, 158).

19. Système de changement de vitesses à synchronisation à verrouillage selon la revendication 17 ou 18, **caractérisé** en ce que les éléments élastiques (106, 108) sont des ressorts en forme de spirale.

20. Système de changement de vitesses à synchronisation à verrouillage selon au moins l'une des revendications 1 à 18, **caractérisé** en ce que les éléments élastiques (26, 28, 106, 108) sont des rondelles ondulées.

21. Système de changement de vitesses à synchronisation à verrouillage selon au moins l'une des revendications 1 à 18, **caractérisé** en ce que les éléments élastiques (26, 28, 106, 108) sont des rondelles élastiques.

22. Système de changement de vitesses à synchronisation à verrouillage selon au moins une des revendications précédentes, **caractérisé** en ce que les éléments élastiques (26, 28, 106, 108, 254, 256) sont soumis à une précontrainte.

23. Système de changement de vitesses à synchronisation à verrouillage selon au moins une des revendications précédentes, **caractérisé** en ce que les éléments élastiques sont agencés sur la timonerie de changement de vitesse ou sont partie constituante de la timonerie de changement de vitesse.

24. Système de changement de vitesses à synchronisation à verrouillage selon au moins une des revendications précédentes, **caractérisé** en ce que la force du changement de vitesse (48) pour l'actionnement de la boîte de vitesses est produite par des moyens de commande.

25. Système de changement de vitesses à synchronisation à verrouillage selon la revendication 24, **caractérisé** en ce que les moyens de commande sont pneumatiques.

26. Système de changement de vitesses à synchronisation à verrouillage selon la revendication 24, **caractérisé** en ce que les moyens de commande sont électriques.

27. Système de changement de vitesses à synchronisation à verrouillage selon l'une des revendications 24 à 26, **caractérisé** en ce que la sélection des moyens de commande est effectuée automatiquement.
